(19) Europäisches Patentamt
European Patent Office
Office européen des brevets

(11) **EP 4 001 778 A1**

(12) **EUROPÄISCHE PATENTANMELDUNG**

(43) Veröffentlichungstag:
**25.05.2022 Patentblatt 2022/21**

(21) Anmeldenummer: **21208799.3**

(22) Anmeldetag: **17.11.2021**

(51) Internationale Patentklassifikation (IPC):
**F24F 1/0003** (2019.01)   **F24F 1/60** (2011.01)
**F24F 1/66** (2011.01)   **F24F 5/00** (2006.01)

(52) Gemeinsame Patentklassifikation (CPC):
**F24F 1/0003; F24F 1/60; F24F 1/66; F24F 5/005**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **20.11.2020 DE 102020130726**

(71) Anmelder: **Heckmeier, Josef**
**85301 Schweitenkirchen (DE)**

(72) Erfinder: **Heckmeier, Josef**
**85301 Schweitenkirchen (DE)**

(74) Vertreter: **Grünecker Patent- und Rechtsanwälte PartG mbB**
**Leopoldstraße 4**
**80802 München (DE)**

(54) **WÄRMEPUMPE FÜR DEN ERDEINBAU**

(57)    Die vorliegende Erfindung betrifft eine Wärmepumpenvorrichtung zur Gebäudebeheizung oder -kühlung oder Warmwassererzeugung mit einem Luftkühler, wobei der Luftkühler ein im Außenbereich großteils erdeingebautes Kühlergehäuse mit einem Lufteinlass und/oder einem Luftauslass umfasst. Der Luftkühler ist mittels eines Luftkühler/Wärmetransportfluidkreislaufs wärmetechnisch mit einer, zumindest einen Verdichter und/oder einen Verdampfer umfassenden, in einem Innenbereich angeordneten Wärmepumpeneinrichtung gekoppelt.

Fig. 1

**Beschreibung**

Die vorliegende Erfindung betrifft eine Wärmepumpenvorrichtung zur Gebäudebeheizung oder -kühlung oder Warmwassererzeugung mit einem Luftkühler, wobei der Luftkühler ein im Außenbereich großteils erdeingebautes Kühlergehäuse mit einem Lufteinlass und/oder einem Luftauslass umfasst.

Bei einer Wärmepumpenvorrichtung kann es sich um eine Kompaktanlage oder eine Splitanlage handeln. Die Wärmepumpenvorrichtung umfasst die eigentliche Wärmepumpeneinrichtung, die in aller Regel zumindest einen Verdampfer, einen Verdichter, einen Kondensator, einen Kältemittelkreislauf und ein Expansionsventil umfasst. Bei einer Kompaktanlage sind die Wärmepumpeneinrichtung und der Luftkühler am selben Ort platziert, entweder im Außenbereich (außerhalb des von der Wärmepumpenvorrichtung zu versorgenden Gebäudes bzw. Gebäudeteils) oder im Innenbereich (innerhalb des von der Wärmepumpenvorrichtung zu versorgenden Gebäudes bzw. Gebäudeteils), und bei einer Splitanlage ist zwischen dem Luftkühler und dem Kältemittelkreislauf noch ein Luftkühler/Wärmetransportfluidkreislauf zwischengeschaltet. Hierdurch ist es möglich, den Kältemittelkreislauf getrennt von dem Luftkühler zu platzieren. Insbesondere kann bei Splitanlagen der Kältemittelkreislauf und die anderen Bestandteile einer Wärmepumpeneinrichtung vollständig im Innenbereich angeordnet werden, während der Luftkühler im Außenbereich, also außerhalb eines Gebäudes, angeordnet wird. Eine Wärmepumpeneinrichtung bedient in aller Regel einen Wärmesenkenkreislauf. Bei diesem handelt es sich üblicherweise um einen Bereich des Heizungs- und/oder Warmwasserkreislaufs für ein Gebäude; aber auch Kühlung ist möglich.

Wesentlicher und üblicher Bestandteil des Kältemittelkreislaufs ist ein Verdichter (Kompressor), mit dem gasförmiges Kältemittel verdichtet wird. Je höher der Kältemitteldruck, desto höher ist auch die Temperatur des Kältemittels nach der Verdichtung. Das verdichtete, gasförmige Kältemittel wird einem Kondensator zugeführt, der zwischen dem Kältemittelkreislauf und dem Wärmesenkenkreislauf angeordnet ist. Im Kondensator verflüssigt sich das Kältemittel wieder, die dabei freigesetzte Wärme wird an den Wärmesenkenkreislauf abgegeben. Die freiwerdende Kondensationswärme setzt sich prozessbedingt aus drei Bestandteilen zusammen. Es handelt sich hauptsächlich um die frei gewordene Verflüssigungswärme aufgrund des Phasenwechsels von gasförmig zu flüssig. Des Weiteren stehen ca. 10 % Wärmeenergie durch die Enthitzung des gasförmigen Kältemittels zur Verfügung. Ein kleiner Energieanteil von ca. 2 bis 3 % wird durch die Unterkühlung des Kältemittels abgegeben. In der Folge wird im flüssigen Kältemittel mittels eines Expansionsventils Druck abgebaut. Das Kältemittel wird im Anschluss einem Verdampfer zugeführt, der zwischen dem Kältemittelkreislauf und dem Luftkühler/Wärmetransportfluidkreislauf angeordnet ist.

In dem Verdampfer nimmt das Kältemittel Wärme auf und geht wieder in den gasförmigen Zustand über. Übliche Verdampfer von Wärmepumpenvorrichtungen werden mit einem Füllstand an flüssigem Kältemittel von ca. 70 % betrieben. Dem Verdampfer wird mittels des Wärmetransportfluids Wärme von dem Luftkühler zugeführt. Weitere Wärmequellen können in Kombination zum Luftkühler verwendet werden. Es eignet sich hier insbesondere die Erdwärme, die Grundwasserwärme oder die Abwärme von entsprechend Abwärme abgebenden Einrichtungen. Bei einem Luftkühler handelt es sich um die kostgünstigste (bezogen auf die Investitions-/Anschaffungskosten) Lösung zum Erzeugen einer Wärmequelle. In aller Regel wird die Außenluft mittels eines Ventilators durch den Luftkühler gesogen, wobei die Temperatur der Außenluft reduziert wird. Die Wärme wird in dem Luftkühler von dem Wärmetransportfluid aufgenommen und mittels des Luftkühler/Wärmetransportfluidkreislaufs dem Verdampfer zugeführt. Das Wärmetransportfluid kann auch ein Gas/Kältemittel sein. Mit solchen Wärmepumpenvorrichtungen lässt sich eine Leistungszahl COP (Coefficience of Performance) im Bereich von 3 bis 4,5 erzielen. Systembedingt sinkt die Effizienz einer Wärmepumpenvorrichtung mit fallenden Außentemperaturen, wodurch der Strombedarf steigt. Des Weiteren kommt es im Bereich des Luftkühlers und aufgrund der Temperaturreduktion in diesem Bereich bei bestimmten Betriebsbedingungen zur Vereisung, weshalb regelmäßig Abtauvorgänge durchgeführt werden müssen, um Wirkungsgradverlusten aufgrund der Vereisung entgegenzuwirken. Bei bestehenden Vorrichtungen erfolgt dies durch Umkehrung des Kältemittelkreislaufs mittels eines Umschaltventils. Hierdurch wird nunmehr Wärme in den Luftkühler/Wärmetransportfluidkreislauf  eingebracht, was in der Folge zur Abtauung im Bereich des Luftkühlers führt. Zuweilen können diese Vorgänge nur in einem bestimmten Außentemperaturbereich durchgeführt werden, weshalb zusätzlich elektrisch betriebene Abtaueinrichtungen vorgesehen sind. Ein Nachteil einer solchen Prozessumkehr im Kältemittelkreislauf für einen Abtauvorgang besteht auch darin, dass dem Wärmesenkenkreislauf hierfür Wärme entzogen wird, die anschließend bei Aufnahme des Normalbetriebs dem Wärmesenkenkreislauf wieder zugeführt werden muss. Insbesondere bei einer Aufstellung im Außenbereich, d.h. außerhalb des Gebäudes, besteht für solche Wärmepumpenvorrichtungen ein entsprechender Platzbedarf. Des Weiteren darf auch die Geräuschentwicklung, die von solchen Einrichtungen, insbesondere dem Ventilator ausgehen, nicht unterschätzt werden. Steigende Grundstückspreise führen auch zu einer Tendenz zu immer kleineren Grundstücken und damit einhergehend einer eingeschränkten Platzierungsmöglichkeit für solche Wärmepumpenvorrichtungen. Diese werden oftmals zur Straßenseite des Grundstücks angeordnet und sind daher sehr leicht von außen zu erkennen. Selbstverständlich besteht die Möglichkeit, durch entsprechende bauliche Maßnahmen, wie Mauern, Zäune oder andere Sichtschutze, hier Abhilfe zu schaffen. Die gattungsgemäße JP H04- 302 931 A befasst sich mit einer erdeingebauten Wärmepumpe im Außenbereich. Die Außeneinheit weist einen erdeingebauten Hauptkörper auf, der im Inneren eine Drainageeinrichtung und einen Rahmen aufweist. Ein Lüfter ist von einer auf dem Rahmen angeordneten Halteplatte gehalten. Auf dem Rahmen sind sowohl ein Kompressor als auch ein Wärmetauscher angeordnet. Die Einheit weist ein Einlassgitter und ein Auslassgitter zum Ansaugen und Abgeben von Luft auf. Oberhalb der Gitter befindet sich noch ein Pflanzaufsatz. Über eine Kühlmittelleitung steht die Einheit mit dem Inneren des Gebäudes in Verbindung.

Die JP 2005-233 527 A befasst sich mit einer Wärmepumpe, die eine Innenraumeinheit und eine Außenraumeinheit aufweist. Die Außeneinheit, die die Hauptbestandteile der Wärmepumpe, einschl. Lüfter und Wärmetauscher, aufweist, ist unter der Erde in einem entsprechenden Hohlraum eingebaut.

Weitere Luftkühlereinheiten sind aus der DE 34 02 238 A1 und der DE 195 02 371 A1 bekannt.

Der vorliegenden Erfindung liegt daher die Aufgabe zugrunde, eine Wärmepumpenvorrichtung der eingangs genannten Art hinsichtlich ihrer Ausgestaltung zu verbessern.

Diese Aufgabe wird durch eine Wärmepumpenvorrichtung gemäß Anspruch 1 gelöst. Es handelt sich demnach um eine Splitanlage. Des Weiteren erfolgt ein separater Erdeinbau, bevorzugt im Abstand vom zu versorgenden Gebäude bzw. der Wohneinheit im Außenbereich. Ein unmittelbares Angrenzen an eine Kellerwand ist jedoch möglich. Unter einem Erdeinbau ist bevorzugt zu verstehen, dass insbesondere das Kühlergehäuse unmittelbar von Erde umgeben ist. Denkbar ist jedoch auch ein Erdeinbau in einer angepassten, vorgeformten Erdgrube, die z.B. gemauerte oder betonierte Wände oder Wände aus einem im Erdreich ausreichend beständigen Material besteht. Eine solche Erdgrube kann auch selbst Bestandteil des Lüftergehäuses sein, solange eine ausreichende Abdichtung zum Verhindern von Kurzschlussströmungen zwischen Lufteinlass und Luftauslass möglich ist. Eine solche Erdgrube muss aber an die Außenabmessungen des Kühlergehäuses sowie Lufteinlass und/oder Luftauslass angepasst sein und es müssen Maßnahmen erkennbar sein, die zur Lufteinleitung und Luftausleitung in und aus der Grube als Bestandteil der Wärmepumpenvorrichtung vorhanden sind. Diese Ausgestaltung bietet somit die Möglichkeit, die zuvor im Außenbereich aufgestellten Kästen zur Unterbringung von Luftkühler und ggf. Ventilatoren in der Erde einzubauen, also versenkt anzuordnen. Hierdurch geraten diese Bestandteile der Wärmepumpenvorrichtung aus dem Blickfeld und erhöhen somit das Platzangebot auf dem Grundstück. Unter Bodenniveau ist der begehbare Boden um die versenkten Bestandteile der Wärmepumpenvorrichtung herum gemeint. Das Kühlergehäuse weist bevorzugt einen großteils unterhalb des Bodenniveaus im Kühlergehäuse mündenden Lufteinlass und/oder einen großteils unterhalb des Bodenniveaus am Kühlergehäuse ausleitenden Luftauslass auf. Im Gegensatz zum Stand der Technik ist im Kühlergehäuse im Wesentlichen nur der Luftkühler (Wärmetauscher) selbst angeordnet. Es sind auf keinen Fall wesentliche Bestandteile der Wärmepumpeneinrichtung (wie z.B der Verdichter) im Kühlergehäuse untergebracht, weil diese im Innenbereich platziert sind. Als Wärmetransportfluid kommen vorrangig Medien, bevorzugt Flüssigkeiten, in Frage, die bis ca. -30°C frostsicher sind und bevorzugt einen Arbeitsbereich von mind. -30°C bis +130°C aufweisen. Anwendung finden können z.B. Sole, Öle, Alkoholfluide etc.

Gemäß einer Ausführungsform kann die im Innenbereich angeordnete Wärmepumpeneinrichtung zusätzlich einen Kondensator und/oder einen Kältemittelkreislauf und/oder ein Expansionsventil umfassen. Der Wärmetransportfluidkreislauf ist von einem Kältemittelkreislauf der Wärmepumpeneinrichtung, wie bei einer Splitanlage üblich, getrennt (die Fluide mischen sich nicht). Die wärmetechnische Kopplung der beiden Kreisläufe findet in aller Regel im Verdampfer der Wärmepumpeneinrichtung statt.

Bevorzugt kann ein Zuführkanal zum Lufteinlass oder ein Abströmkanal vom Luftauslass zumindest bereichsweise, bevorzugt mindestens 30 % und weiter bevorzugt mindestens 50 %, erdeingebaut sein. Die Kanäle können gemauert, betoniert, aus Kunststoff, aus Stahl oder aus Aluminium sowie teilweise durch eine Haus- bzw. Kellerwand geformt sein. Es eignet sich jegliche Konstruktion, die zur Luftführung ohne Kurzschlussströmungsproblematik geeignet ist. Günstigerweise kann der Abströmkanal weiter vom Gebäude entfernt angeordnet sein, als der Zuführkanal. In vielen Konstruktionen steht ein Ventilator mit dem Abströmkanal in Verbindung, so dass Geräuscheinbringung vom Gebäude ferngehalten werden kann. Die Luftführung unterhalb des Bodenniveaus kann auch zu einer Vorerwärmung der Luft genutzt werden. Der Ventilator ist daher bevorzugt außerhalb des Kühlergehäuses angeordnet, evtl. an dieses angeflanscht. Das Kühlergehäuse ist demnach nicht für die gesamte unterirdische Luftführung zuständig, sondern hauptsächlich für die konzentrierte und somit optimierte Führung der Luft durch den Luftkühler hindurch, wodurch sich ein guter Wirkungsgrad erzielen lässt. Der eigentliche Luftkühler nimmt im Kühlergehäuse mind. 50%, bevorzugt mind. 75% des vorhandenen Bauraumvolumens ein. Im Stand der Technik wird der eigentliche Luftkühler hinsichtlich seines Gehäuseaufbaus weniger optimal in den Strömungskanal eingebunden oder das Gehäuse so groß dimensioniert, dass viele weitere Bestandteile der erdeingebauten Einheit in diesem Gehäuse platziert sind. Oft handelt es sich im Stand der Technik um ganze Wärmepumpen, die einfach in ein Erdgehäuse gestellt werden, wohingegen bei der vorliegenden Erfindung das Kühlergehäuse auch unmittelbar im Erdreich angeordnet werden kann. Die Zu- und Abströmung zum Lufteinlass bzw. Auslass erfolgt dann hauptsächlich mittels des Zuführkanals bzw. des Abströmkanals, die luftdicht an das Kühlergehäuse angrenzen.

Bei einer besonders vorteilhaften Ausgestaltung ist vorgesehen, dass der Zuführkanal zum Lufteinlass eine Einlassöffnung aufweist, die im Wesentlichen bündig zum Bodenniveau angeordnet ist und/oder der Abströmkanal eine Auslassöffnung aufweist, die im Wesentlichen bündig zum Bodenniveau angeordnet ist. Aufgrund dieser Ausgestaltung kann auf entsprechende Elemente, die über dem Bodenniveau angeordnet sind, verzichtet werden. Es besteht z.B. die Möglichkeit, den oberen Abschluss des Zuführkanals und/oder des Abströmkanals mittels Betonringen zu erzeugen, um eine ausreichende Stabilität zu erhalten. Darüber hinaus sind Betonringe genormt und in unterschiedlichen Höhen erhältlich, so dass die Anforderungen, die an den Erdeinbau der übrigen Bestandteile gestellt sind (z.B. hinsichtlich Toleranzen) geringgehalten werden können. Ein entsprechender Ausgleich ist möglich. Es besteht aber durchaus die Möglichkeit, den Lufteinlass des Zuführkanals und/oder den Luftauslass des Abströmkanals leicht erhöht anzuordnen, z.B. um wenige Zentimeter (bevorzugt zwischen 3 bis 10 cm) zu platzieren. Dies dient als Schutzmaßnahme gegen Wassereinlauf aus der Umgebung bei Starkregen. Eine solche Schutzmaßnahme soll von dem Ausdruck "im Wesentlichen" noch abgedeckt sein.

Hierzu kann vorgesehen werden, dass die Einlassöffnung des Zuführkanals und/oder die Auslassöffnung des Abströmkanals von einer dem jeweiligen Luftstrom sicherstellenden begeh-oder befahrbaren Einrichtung, insbesondere einem Gitterrost, abgedeckt ist bzw. sind. Hier eignet sich z.B. die Kombination von abschließenden Betonringen (die auch leicht überstehen können) und eingesetzten Gitterrosten. Eine solche Kombination ist weit verbreitet, z.B. zum Abdecken von Kellerschächten, im Einsatz und hat sich hinsichtlich ausreichender Stabilität bewährt. In ähnlicher Weise lassen sich auch die erwähnten Öffnungen abdecken, wobei gleichzeitig die Luftströmung gewährleistet wird. Die gewünschte Stabilität richtet sich dann nach dem jeweiligen Standort. Liegt dieser z.B. in einer Hofeinfahrt, sollte eine ausreichende Stabilität für eine Befahrbarkeit bis zu einer vorgegebenen Last erzielt werden können.

Günstigerweise kann im oder am Auslasskanal eine, eine Zwangsluftströmung bewirkende Ventilatoranordnung vorgesehen sein, die bevorzugt zumindest zum Großteil unterhalb des Bodenniveaus angeordnet ist. Die Anbringung der Ventilatoreinrichtung im oder am Auslasskanal hat Vorteile und sich im Bereich der Wärmepumpentechnik bewährt. Bevorzugt verschwindet die Ventilatoreinrichtung vollständig im Auslasskanal unter das Bodenniveau. Hierdurch ergeben sich mehrere Vorteile. Zum einen kann durch einen entsprechend abgesenkten Einbau auch das Ventilatorgeräusch reduziert werden und zum anderen ist der Ventilator gegen viele Witterungseinflüsse, z.B. Windlasten, geschützt. Als Ventilatoreinrichtung kann z.B. ein Lüfter der Firma Ziehl-Abegg. Zum Einsatz können je nach Einbausituation sowohl Radial- als auch Axialventilatoren verwendet werden.

Bevorzugt können der Zuführkanal, das Kühlergehäuse und der Auslasskanal gemeinsam den Zwangsluftstrom im Wesentlichen V- oder U-förmig umleiten, wobei die Mittelachse des V oder U vertikal ausgerichtet ist mit einer Abweichung von maximal ± 45°. Luft kommt demnach von oberhalb des Bodenniveaus, wird unterhalb des Bodenniveaus durch den Luftkühler geleitet und nach oben zum Abströmen an oder oberhalb des Bodenniveaus wieder abgegeben. Eine V- oder U-förmige Umlenkung lässt sich sehr einfach mit wenig Verlusten umsetzen. Mit diesen Anordnungen ist in aller Regel auch ein ausreichender Abstand zwischen Einlassöffnung und Auslassöffnung zu erzielen, um Kurzschlussströmungen zu vermeiden. So können z.B. der Lufteinlass und der Luftauslass diametral zum Luftkühler auf der gleichen Seite relativ zum Luftkühler angeordnet werden. Ansaugen und Ableiten der Luft kann demnach in gleicher Richtung zum Luftkühler aus dem Boden, z. B. nach oben, erfolgen, wobei trotzdem ein Kurzschluss vermeidbar ist.

Bei einer weiteren Ausgestaltung ist vorgesehen, dass das Kühlergehäuse eine Draingeeinrichtung zum Ableiten von insbesondere Kondenswasser ins Erdreich aufweist. Hierzu kann z.B. das Lüftergehäuse in einem Kiesbett angeordnet werden und geeignete Drainageöffnungen aufweisen, wobei das Kiesbett gleichzeitig eine Abdichtung gegen Kurzschlussströmung darstellen kann. Sofern ein sickerfähiger Boden vorliegt, kann auch dieser ausreichen. Ein geeignetes Kiesbett kann eine Stärke von z.B. bis 50 cm aufweisen. Hierzu ist es weiter günstig, wenn der Luftkühler schräg eingebaut wird, damit es zu einem besseren Abtropfen des Kondenswassers oder bei der Abtauung des Abtauwassers kommt. Die Luft wird dann bevorzugt ebenfalls schräg geführt, indem günstigerweise der Einlass höher als der Auslass angeordnet ist. Auch eventuell angesaugtes Laub kann vom Luftkühler bei schräger Anordnung und unterbrochenem Luftstrom abfallen. Eine solche Draingeeinrichtung hilft auch gegen eindringendes Regenwasser.

Darüber hinaus besteht die Möglichkeit, dass der Zuführkanal an eine Ablufteinrichtung einer Wohnraumlüftung angeschlossen ist. Moderne Gebäude sind so gut abgedichtet und isoliert, dass geeignete technische Maßnahmen zur Wohnraumlüftung vorgesehen sind. Häufig weist diese Wohnraumlüftung einen Gegenstromwärmetauscher auf und diese befindet sich im ständigen Einsatz. Die warme Abluft kann auch nach Durchströmen durch den Gegenstromwärmetauscher noch eine Temperatur haben, die oberhalb der Umgebungstemperatur liegt. Insbesondere in der Übergangszeit kann diese Restwärme genutzt werden, indem die entsprechende Abluft dem Zuführkanal zugeführt wird, um anschließend durch den Luftkühler hindurchgeleitet zu werden. Generell führt die eingeleitete Abluft, auch dann, wenn die Ventilatoreinrichtung stillsteht, zu einem gewissen Anheben des Temperaturniveaus im Bereich des Luftkühlers, was sich vorteilhaft auf dessen Betrieb, insbesondere Abtauerfordernisse, auswirkt.

Gemäß einer besonders vorteilhaften Ausgestaltung kann vorgesehen werden, dass der Luftkühler ein Soleluftkühler ist, der mittels Soleleitungen mit einer, einen Verdampfer umfassenden, Wärmepumpeneinrichtung verbunden ist. Bevorzugt stehen die Soleleitungen unmittelbar mit dem Verdampfer in Interaktion, d.h. sie sind Zu- und Rücklauf einer Sekundärseite eines Verdampfers, während die Primärseite des Verdampfers mit einem Kältemittelkreislauf verbunden ist. Hierdurch ist es möglich, die Wärmepumpenvorrichtung als Splitanlage auszugestalten, so dass der Luftkühler, die Ventilatoreinrichtung und die entsprechenden Kanäle im Außenbereich und die weiteren Elemente der Wärmepumpenvorrichtung im Gebäude angeordnet sind, wobei die Verbindung mittels der Soleleitungen von und nach draußen erfolgt. Anstelle von Sole kann auch ein anderes geeignetes Übertragungsmedium eingesetzt werden.

Der Erdeinbau vereinfacht sich noch einmal, wenn gemäß einer Variante eine Erdeinbaugruppe vorgesehen ist, die einen im Wesentlichen vertikalen Erdeinbauschacht als Bestandteil des Zuführkanals, das Kühlergehäuse, einen weiteren, im Wesentlichen vertikalen Erdeinbauschacht als Bestandteil des Auslasskanals und Luftstrom sicherstellende Verbindungseinrichtungen zwischen dem Lufteinlass des Kühlergehäuses und dem zugehörigen Erdeinbauschacht und dem Luftauslass des Kühlergehäuses und dem zugehörigen Erdeinbauschacht umfasst. Hier kann unter Umständen auf bereits bekannte Elemente zum Erzeugen von Erdeinbauschächten zurückgegriffen werden. Aus der Abwassertechnik sind z.B. geeignete Betonelemente bekannt. Vorzugsweise wird jedoch ein beschichtetes Stahlrohr, das entsprechend verrottungsbeständig ist, eingesetzt. Es bieten sich z.B. Rohre mit einem Durchmesser von mind. 1m an, weil diese auch ausreichend Platz für Montagearbeiten bieten. Querverbindungskanäle zum Einlass und vom Auslass können auch aus einem anderen Material, z.B. Kunststoff bestehen. Hierdurch ist es auch möglich, eine einfache Anpassung der Längen der Querverbindungskanäle an die jeweilige Einbausituation der beiden Erdeinbauschächte vorzunehmen. Bei Verwendung ausreichend großer Erdeinbauschächte (Durchmesser > 80 cm) ist es auch möglich, entsprechend große Ventilatoren einzusetzen, die dann mit niedrigerer Drehzahl betrieben werden können, um einen vorbestimmten Luftvolumenstrom zu fördern. Eine Reduktion der Geräuschbelastung ist deshalb möglich.

Bevorzugt kann die Erdeinbaugruppe als vormontierte Einbaueinheit für den gemeinsamen Erdeinbau ausgebildet sein. Hier bietet sich z.B. an, die Erdeinbaugruppe in sich entsprechend stabil auszuführen, so dass sie mittels eines Gabelstaplers oder Krans als Einheit in eine entsprechende Erdöffnung eingesetzt werden kann. Möglich ist aber auch das Vorsehen eines entsprechenden Stahlrahmens für einen solchen Einsetzvorgang, der dann ebenfalls in der Erde verbleiben oder abgebaut werden kann. Die Erdeinbaugruppe kann aber bereits weitere Bestandteile der Wärmepumpenvorrichtung, z.B. die Ventilatoreinrichtung, den Luftkühler etc. aufweisen. Alternativ ist ein modularer Aufbau möglich, der einen einfachen Zusammenbau vor Ort erlaubt.

Um ein einfaches Montieren, Warten und Demontieren (z.B. Austausch) der Ventilatoreinrichtung zu ermöglichen, kann der Erdeinbauschacht, der Bestandteil des Auslasskanals ist, eine Anbringeinrichtung, insbesondere einen nach innen ragenden Aufsetzflansch, zum Anbringen der Ventilatoreinrichtung von der dem Bodenniveau zugeordneten Öffnung des Erdeinbauschachts aufweisen. Entsprechend kann von oben auf die Ventilatoreinrichtung zugegriffen werden. Selbstverständlich ist eine solche Ausgestaltung auch beim Erdeinbauschacht möglich, der Bestandteil des Zuführkanals ist.

Eine besonders vorteilhafte Ausgestaltung sieht vor, dass die im Innenbereich angeordnete Wärmepumpeneinrichtung einen wärmetechnisch mit dem Luftkühler/Wärmetransportfluidkreislauf gekoppelten Verdampfer, einen wärmetechnisch mit einem Wärmesenkenkreislauf gekoppelten Kältemittelkreislauf und bevorzugt einen Unterkühler aufweist, wobei dann der Unterkühler mit einer Primärseite in den Kältemittelkreislauf und mit einer Sekundärseite in den Luftkühler/Wärmetransportfluidkreislauf als parallel geschaltete Einheit zum Luftkühler und Verdampfer eingebunden ist. Das bedeutet, dass die Sekundärseite des Unterkühlers sowohl mit der Vorlaufleitung als auch mit der Rücklaufleitung des Luftkühler/Wärmetransportfluidkreislaufs mit dem Luftkühler und dem Verdampfer verbunden ist. Zum Beispiel kann eine von der Sekundärseite des Unterkühlers kommende Zulaufleitung in die Vorlaufleitung und eine Stichleitung mit der Sekundärseite des Unterkühlers und der Rücklaufleitung des Luftkühler/Wärmetransportfluidkreislaufs verbunden sein. Durch diese Maßnahme wird erreicht, dass im Kältemittel eine zusätzliche Unterkühlung stattfindet, die zur Effizienzsteigerung genutzt werden kann. In herkömmlichen Systemen beträgt die Unterkühlung etwa 2° bis 3° K. In der vorteilhaften Ausgestaltung wird eine stärkere Unterkühlung bewirkt. Unterkühlungen bis 25° K (und mehr) sind möglich. Durch die niedrigere Temperatur des Kältemittels erfolgt im Verdampfer auch nur eine geringere Überhitzung des Kältemittels und ein geringerer Druckaufbau. Das führt zu dem Vorteil, dass die von dem Verdichter zu erbringende Leistung kleiner ist. Der Vorteil macht sich insbesondere bei höheren Temperaturen des Kältemittels bemerkbar und ist demnach abhängig von der jeweiligen Betriebssituation der Wärmepumpenvorrichtung. Es ist jedoch möglich, dass man mit einem kleineren Verdichter eine höhere Heizleistung erzielt. Aufgrund der erfindungsgemäßen Anordnung wird auch das Wärmeniveau im Luftkühler/Wärmetransportfluidkreislauf angehoben, wodurch es erst später zu einer notwendigen Abtauung kommen muss. Insgesamt lässt sich die Leistungszahl einer solchen Wärmepumpenvorrichtung aufgrund der erfindungsgemäßen Anordnung steigern.

Prinzipiell ist die Verwendung eines Unterkühlers bei Wärmepumpenvorrichtungen bekannt.

Allerdings werden diese zur wärmetechnischen Kopplung des Kältemittelkreislaufs und des Wärmesenkenkreislaufs oder in einer Reihenschaltung zum Luftkühler verwendet (siehe z.B. KR 101223612 B1).

Des Weiteren kann das Kühlergehäuse eine vom Bodenniveau aus zugängliche bzw. zugänglich zu öffnende Revisionsöffnung aufweisen. Zwar sind Luftkühler für den Dauerbetrieb ausgelegt. Zuweilen kann es jedoch auch hier zu Wartungs- bzw. Austauschvorgängen kommen. Eine entsprechende Revisionsöffnung ist sachdienlich. Diese kann auch bündig an die Einlassöffnung und Auslassöffnung angepasst sein. Das Kühlergehäuse muss nur entsprechend zur Vermeidung einer Kurzschlussströmung abgedichtet werden. Entsprechend zu öffnende und abgedichtete Revisionsöffnungen sind relativ einfach zu erzeugen.

Darüber hinaus bezieht sich die Erfindung auf die Verwendung einer Erdeinbaugruppe zur Herstellung einer Wärmepumpenvorrichtung nach einem der Ansprüche 1 bis 14, wobei die Erdeinbaugruppe ein Kühlergehäuse mit einem Lufteinlass und einem Luftauslass, einem mit dem Lufteinlass verbindbaren oder verbundenen Zuführkanal und einem mit dem Luftauslass verbindbaren oder verbundenen Abströmkanal aufweist. Eine solche Erdeinbaugruppe hat zu einer günstigen Ausgestaltung der Wärmepumpenvorrichtung viel beizutragen, weil eine entsprechende Versenkung eines Teils der Wärmepumpenvorrichtung im Erdeinbau möglich ist.

Vorteilhafterweise ist gemäß einer Ausführungsform im Kältemittelkreislauf vor oder auf der Primärseite des Unterkühlers ein Regelventil und/oder Absperrventil vorgesehen, mittels dem oder denen der Anteil des Kältemittelmassenstroms, der durch den Unterkühler strömt, einstellbar ist. Der Unterkühler wird demnach nicht zwangsläufig von dem gesamten Kältemittelmassenstrom durchströmt, sondern es erfolgt ein geregelter, bzw. gesteuerter Bypass des Kältemittels am Unterkühler vorbei, so dass das Mischungsverhältnis zwischen dem Anteil des Kältemittels, der durch den Unterkühler strömt, und dem Anteil des Kältemittelmassenstroms, der den Unterkühler umgeht, eingestellt werden kann. Die Einstellung erfolgt bevorzugt aufgrund bestimmter Betriebsparameter, so dass eine Anpassung an den jeweiligen Bedarf des Wärmesenkenkreislaufs und/oder der Situation im Luftkühler/Wärmetransportfluidkreislauf entsprochen werden kann. Anders gesagt, kann eine genauere Regelung bzw. Einstellung der Unterkühlung im Kältemittelkreislauf vorgenommen werden.

Zur Verbesserung des Systems kann darüber hinaus vorgesehen sein, dass im Luftkühler/Wärmetransportfluidkreislauf vor oder auf der Sekundärseite des Unterkühlers ein Regelventil und/oder Absperrventil vorgesehen ist, mittels dem oder denen der Anteil des Wärmetransportfluidstroms, der durch den Unterkühler strömt, einstellbar ist. Auch im Luftkühler/Wärmetransportfluidkreislauf strömt somit nicht zwingend das gesamte Wärmetransportfluid durch den Unterkühler, sondern nur ein bestimmter Teil, der wiederum abhängig ist von z.B. bestimmten Betriebsparametern. Auch hierdurch lässt sich die Unterkühlung gezielter einstellen. Von besonderem Vorteil ist selbstverständlich die Regelung bzw. Einstellung sowohl des Anteils des Kältemittelmassenstroms als auch des Anteils des Wärmetransportmittelfluidstroms. Gemäß einer weiteren Ausgestaltung kann deshalb eine Regel- und/oder Steuereinrichtung vorgesehen sein, mittels der bzw. denen das Regelventil und/oder Absperrventil im Kältemittelkreislauf und/oder das Regelventil und/oder Absperrventil im Luftkühler/Wärmetransportfluidkreislauf regelbar bzw. einstellbar ist bzw. sind.

Vorteilhafterweise kann bzw. können die Regel- und/oder Steuereinrichtung derart ausgestaltet sein, dass die Regelung bzw. Einstellung des oder der Regelventils(e) und/oder Absperrventils(e) in Abhängigkeit von mindestens einem der folgenden Parameter erfolgt:

Außentemperatur, Druck des Kältemittels, Temperatur des Kältemittels, Druck des Wärmetransportfluids, Temperatur des Wärmetransportfluids, Rücklauftemperatur im Wärmesenkenkreislauf, Vorlauftemperatur im Wärmesenkenkreislauf, Stromaufnahme (Leistung) eines Verdichters im Kältemittelkreislauf, Vereisungszustand im Luftkühler/Wärmetransportfluidkreislauf, Flüssigkeitsstand des Kältemittels in einem den Kältemittelkreislauf mit dem Luftkühler/Wärmetransportfluidkreislauf wärmetechnisch koppelnden Verdampfer sowie der gewünschten Unterkühlungstemperatur. Es besteht somit die Möglichkeit, die Regelung an eine entsprechende Betriebssituation anzupassen. Je mehr diese oder dieser Parameter in die Regelung bzw. Steuerung eingebunden sind, desto genauer und effizienter kann die Wärmepumpenvorrichtung eingesetzt werden. Zur Optimierung ist insbesondere die Unterkühlung an die jeweiligen Parameter anpassbar. Ziel kann es aber auch sein, einen der genannten Parameter genau einzustellen, was z.B. in einer Abhängigkeit einer gewünschten Unterkühlungstemperatur erfolgen kann.

Eine weitere Vorrichtungsvariante sieht vor, dass die Regel- und/oder Steuereinrichtung derart ausgestaltet ist bzw. sind, dass die Regelung bzw. Einstellung des Regelventils und/oder Absperrventils im Kältemittelkreislauf derart erfolgt, dass mit steigender Vorlauftemperatur im Wärmesenkenkreislauf bzw. steigender Temperatur des Kältemittels in einem den Kältemittelkreislauf und den Wärmesenkenkreislauf wärmetechnisch koppelnden Kondensator der Anteil des Kältemittelmassenstroms durch den Unterkühler erhöht wird. Hierdurch wird eine Effizienzsteigerung auch bei höheren Vorlauftemperaturen im Wärmesenkenkreislauf erzielt.

Günstigerweise kann oder können die Regel- und/oder Steuereinrichtung bei einer Variante auch derart ausgestaltet sein, dass die Regelung bzw. Einstellung des Regelventils und/oder Absperrventils im Luftkühler/Wärmetransportfluidkreislauf von der Temperatur in oder angrenzend an einen den Kältemittelkreislauf und den Wärmesenkenkreislauf wärmetechnisch koppelnden Kondensator und/oder von der Temperatur in einem oder angrenzend an einen dem Kältemittelkreislauf und dem Luftkühler/Wärmetransportfluidkreislauf wärmetechnisch koppelnden Verdampfer erfolgt. Die Temperatur kann natürlich auch in den Zu- oder Ableitungen des Kondensators bzw. des Verdampfers ermittelt werden, wodurch Rückschlüsse auf den Betriebszustand der jeweiligen Einheit gewonnen werden können. Mit anderen Worten bedeutet dies, dass die Betriebsart des Unterkühlers in Abhängigkeit der jeweiligen Situation im Kondensator und/oder Verdampfer geregelt bzw. eingestellt wird.

Damit im Verdampfer auch mehr Wärmeenergie aufgenommen werden kann, ist gemäß einer Ausführungsform vorgesehen, dass die Regel- und/oder Steuereinrichtung derart ausgestaltet ist bzw. sind, dass eine Füllstandsregelung des flüssigen Kältemittels innerhalb eines den Kältemittelkreislauf mit dem Luftkühler/Wärmetransportfluidkreislauf wärmetechnisch koppelnden Verdampfer derart erfolgt, dass mindestens 90 % flüssiges Kältemittel und maximal 10 % dampfförmiges Kältemittel im Verdampfer vorhanden sind. Die Füllstandsregelung kann auch auf die Einspritzung des Kältemittels in den Verdampfer zurückgreifen. Durch diese Maßnahme werden die Kälteleistung und damit verbunden auch die Heizleistung gesteigert und der Wirkungsgrad erhöht. Zudem kann man mit noch kleineren Verdichtern und kleineren Bauteilen eine höhere Kälteleistung bzw. Heizleistung erzielen.

Damit die Wärmepumpenvorrichtung besser ausgenutzt werden kann, ist gemäß einer weiteren Ausgestaltung vorgesehen, dass im Kältemittelkreislauf zwischen einem den Kältemittelkreislauf und den Luftkühler/Wärmetransportfluidkreislauf wärmetechnisch koppelnden Verdampfer und einem Verdichter ein Sauggasüberhitzer zum Reduzieren, bevorzugt Eliminieren, von flüssigen Kältemittelanteilen vorgesehen ist. Der Betrieb eines Verdichters (Kompressors) erfordert, dass möglichst gasförmiges Kältemittel ohne Flüssigkeitsanteile zugeführt wird. Ansonsten kann es zu Schäden am Verdichter kommen. Durch Verwendung eines Sauggasüberhitzers kann der Gasanteil (bzw. Dampfanteil) im Verdampfer reduziert und der Flüssigkeitsanteil stark erhöht werden. Der Sauggasüberhitzer dient als Sicherungseinheit zum Verhindern, dass ein bestimmter Wert an Gas- bzw. Dampfanteil überschritten wird. Generell ist ein möglichst geringer bzw. gar kein flüssiger Anteil gewünscht.

Von Vorteil ist es dabei weiter, wenn gemäß einer weiteren Ausgestaltung der Sauggasüberhitzer mit seiner Primärseite mit dem Kältemittelkreislauf, nämlich zwischen dem den Kältemittelkreislauf und dem den Luftkühler/Wärmetransportfluidkreislauf wärmetechnisch koppelnden Verdampfer und dem Verdichter zum Reduzieren, bevorzugt Eliminieren, von flüssigen Kältemittelanteilen, verbunden ist und mit seiner Sekundärseite mit dem Kältemittelkreislauf, nämlich zwischen dem den Unterkühler und dem den Kältemittelkreislauf und den Luftkühler/Wärmetransportfluidkreislauf wärmetechnisch koppelnden Verdampfer, verbunden ist. Der unterkühlte Kältemittelmassenstrom dient somit auch zum Betreiben des Sauggasüberhitzers und sorgt entsprechend für das Austreiben der Flüssigkeitsanteile vor Erreichen des Verdichters.

Vorteilhafterweise ist im Kältemittelkreislauf zwischen dem Unterkühler und einem den Kältemittelkreislauf und den Luftkühler/Wärmetransportfluidkreislauf wärmetechnisch koppelnden Verdampfer ein Expansionsventil angeordnet, dessen Durchflussquerschnitt regelbar bzw. einstellbar ist. Hierdurch wird auch die Durchflussmenge an Kältemittel durch den Verdampfer mitbestimmt. Diese Regelung kann somit ebenfalls einen sehr großen Anteil an der vorteilhaften Verwertung der Unterkühlung haben. Üblicherweise werden bei Expansionsventilen die Öffnungswinkel über einen Schrittmotor elektronisch geregelt, was auch hier der Fall sein kann. Der Öffnungswinkel ist in aller Regel abhängig vom erforderlichen Druck und/oder der erforderlichen Temperatur.

Wärmepumpenvorrichtungen arbeiten auf der Wärmequellenseite üblicherweise mit einer natürlichen Quelle, der Wärme entzogen wird. Entsprechend ist es auch hier gemäß einer Variante von Vorteil, wenn die Wärmequelle des Wärmetransportfluidkreislaufs mindestens eine Wärme aufnehmende Vorrichtung aus folgender Gruppe ist: Eine Luftwärme aufnehmende Vorrichtung, eine Erdwärme aufnehmende Vorrichtung, eine Grundwasserwärme aufnehmende Vorrichtung, eine Prozesswärme aufnehmende Vorrichtung, eine Abwärme aufnehmende Vorrichtung oder eine Solarwärme aufnehmende Vorrichtung. Die Auswahl der entsprechenden Wärme aufnehmenden Vorrichtung hängt jeweils von den Gegebenheiten ab. Eine für den Hausbau kostengünstige Lösung ist sicherlich eine Luftwärme aufnehmende Vorrichtung z. B. in Form eines Luftkühlers. Bei in der Industrie eingesetzten Anlagen kann z. B. die Prozesswärme oder Abwärme genutzt werden. Kombinationen sind möglich.

Die vorliegende Wärmepumpenvorrichtung ist eine Splitanlage, bei der die Wärmequelle nicht sofort mit dem Kältemittelkreislauf interagiert, sondern über einen Zwischenkreislauf, nämlich dem Luftkühler/Wärmetransportfluidkreislauf, in Verbindung steht. Hierdurch ist es auch möglich, die Anlage, insbesondere im Außenbereich, einfacher auszugestalten und wesentliche bzw. wichtige Bauelemente des Kältemittelkreislaufs in den Innenbereich zu verlagern. Hierzu kann gemäß einer vorteilhaften Ausgestaltung das Wärmetransportfluid des Luftkühler/Wärmetransportfluidkreislaufs aus folgender Gruppe ausgewählt sein: Wasser, Gemisch aus Wasser und Frostschutzmittel, insbesondere Sole, Thermoöl und Alkohol. In den gemäßigten Breitengraden mit frostigen Wintern muss ein Fluid eingesetzt werden, das bei den zu erwartenden tiefsten Temperaturen noch fließfähig bleibt. In vielen Fällen hat sich deshalb die Verwendung von Sole etabliert.

Im Hinblick auf den Wärmesenkenkreislauf kann es sich bei diesem um einen Bereich eines Heizungs- und/oder Warmwasserkreislaufs mit bevorzugt Wasser als den Wärmesenkenkreislauf durchströmendes Wärmesenkenfluid handeln. In aller Regel geht es bei der Verwendung von Wärmepumpenvorrichtungen um das Betreiben eines Heizkreislaufs meist in Kombination mit Betreiben eines Warmwasserkreislaufs. Bei dieser gängigsten Anwendungsart stellt die erfindungsgemäße Wärmepumpenvorrichtung eine effektive Art und Weise der erforderlichen Wärmeerzeugung bereit.

Die Wärme aufnehmende Vorrichtung ist im Außenbereich und der Kältemittelkreislauf kann, bevorzugt einschließlich des Unterkühlers im Innenbereich, insbesondere eines Gebäudes, angeordnet sein. Hierdurch sind sehr einfache und geräuscharme Wärme aufnehmende Vorrichtungen im Außenbereich zu erzeugen. Darüber hinaus müssen keine langen Fluidleitungen für den Kältemittelkreislauf bereitgestellt werden.

Bevorzugt ist vorgesehen, dass die Masseströme an Kältemittel und Wärmetransportfluid durch den Unterkühler geregelt bzw. automatisch gesteuert werden. Erst durch die aufeinander abgestimmte Regelung bzw. automatische Steuerung lässt sich der Unterkühler in der gesamten Bandbreite der möglichen Betriebsbedingungen effektiv einsetzen. Ansonsten ist eine Optimierung zwar für bestimmte Betriebspunkte möglich; nicht jedoch im gesamten Betriebsbereich gegeben.

Bevorzugt kann in Abhängigkeit der Außentemperatur mittels des Unterkühlers das Kältemittel um einen Temperaturbereich von 5° bis 25° K vor einer Verdampfung unterkühlt werden. Die jeweilige konkrete Unterkühlung hängt dann von verschiedenen Betriebsparametern bzw. der gewünschten Betriebseinstellung ab. Bei niedrigen Kondensatortemperatur wird z. B. der Massenstrom an Kältemittel durch den Unterkühler reduziert bzw. komplett unterbunden, während sich dieser Massenstrom an Kältemittel bei steigenden Kondensatortemperaturen immer weiter erhöht. Dies steigert die Effizienz und die Leistung des Verdichters durch Druckabbau sowie Gewinnung von Unterkühlungswärme.

Günstigerweise kann das unterkühlte Kältemittel einem Verdampfer zugeführt werden, wobei der Verdampfer auf der Kältemittelseite mit einem Füllgrad nahe an der überfluteten Verdampfung, insbesondere mit einem Füllgrad von mindestens 90 %, bevorzugt mindestens 94 %, an flüssigem Kältemittel betrieben wird. Hierdurch wird eine sehr große Menge an flüssigem Kältemittel zur Aufnahme von Wärme aus dem Luftkühler/Wärmetransportfluidkreislauf bereitgestellt. Entsprechend kann eine höhere Energiemenge von der Wärmequellenseite übernommen werden.

Systembedingt erfolgt bei vielen Regelungen bzw. Einstellungen auch eine Erhöhung der Temperatur im Luftkühler/Wärmetransportfluidkreislauf. Gemäß einer Variante kann deshalb bei Weiterbetrieb des Kältemittelkreislaufs der Massestrom an Wärmetransportfluid durch den Unterkühler erhöht werden, um einen Abtauvorgang im Bereich des Luftkühlers durchzuführen. Bei einem Luftkühler kann es im Bereich des Luftkühlers ab bestimmten Außentemperaturen und Betriebsbedingungen zur Vereisung desselben kommen. Damit es nicht zu einem Wirkungsgradverlust kommt, muss ein regelmäßiger Abtauvorgang vorgenommen werden. Prinzipiell wird der Luftkühler/Wärmetransportfluidkreislauf bei dem vorliegenden System mit höherer Temperatur betrieben, weshalb es unter Umständen zu weniger Abtauvorgängen kommen muss. Ist dennoch ein Abtauvorgang vorzusehen, kann der Kältemittelkreislauf einfach weiterbetrieben werden (ohne Prozessumkehr). Zwar sinkt die Effektivität im Kältemittelkreislauf und somit die Abgabe an den Wärmesenkenkreislauf; jedoch wird keine Wärme aus dem Wärmesenkenkreislauf zu Abtauzwecken abgeführt. Indem der Massestrom an Wärmetransportfluid durch den Unterkühler erhöht wird, fließt auch mehr Wärme in den Luftkühler/Wärmetransportfluidkreislauf und führt in der Folge zum gewünschten Abtauvorgang. Selbstverständlich ist diese Vorgehensweise auf bestimmte Betriebsbedingungen, insbesondere auf einen bestimmten Außentemperaturbereich, z. B. -5° C (evtl. auch bis -10° C möglich) bis 12° C beschränkt. In vielen Fällen handelt es sich aber hier um einen sehr häufigen Betriebszustand, der entsprechend effektiver durchgeführt werden kann. Erst bei noch niedrigeren Außentemperaturen oder anderer Betriebsbedingungen muss auf andere Abtautechniken zurückgegriffen werden, z. B. durch Umkehrung des Kältemittelkreislaufs oder durch zusätzliche Heizeinrichtungen im Wärmequellenbereich.

Des Weiteren besteht die Möglichkeit, dass nach einem Abschalten des Kältemittelkreislaufs der Luftkühler/Wärmetransportfluidkreislauf zumindest temporär geöffnet bleibt, um einen Druckausgleich im Kältemittelkreislauf vor dem Wiederanschalten des Kältemittelkreislaufs zu bewirken. Der Luftkühler/Wärmetransportfluidkreislauf muss bei diesem Vorgang nicht zwingend in Gang gesetzt sein, sondern es reicht, dass durch einen offenen Kreislauf Wärme abgeführt werden kann, so dass sich im Kältemittelkreislauf die Temperatur und damit der Druck reduzieren. Hierdurch wird der Verdichter beim Wiederanfahren vor Druckschlägen und hohen elektrischen Anlaufströmen geschützt.

Darüber hinaus besteht prinzipiell die Möglichkeit, dass weitere Unterkühler eingesetzt werden oder Unterkühler mit einem dritten Mediumkreislauf verwendet werden. Durch diesen kann z.B. während eines Kühlbetriebs die Abwärme zu Heizzwecken und/oder zur Warmwasserbereitung besser genutzt werden.

Im Folgenden werden Ausführungsbeispiele der vorliegenden Erfindung anhand von Zeichnungen näher erläutert. Es zeigen:

Fig. 1    eine schematische Prinzipskizze einer erfindungsgemäßen Wärmepumpenvorrichtung,

Fig. 2    eine perspektivische Darstellung einer Erdeinbaugruppe für eine erfindungsgemäße Wärmepumpenvorrichtung,

Fig. 3    eine Draufsicht der Erdeinbaugruppe aus Fig. 2,

Fig. 4    eine Schnittdarstellung der Erdeinbaugruppe aus Fig. 3 entlang der Linie IV-IV geschnitten,

Fig. 5    eine Schnittdarstellung der Erdeinbaugruppe aus Fig. 3 entlang der Linie V-V geschnitten,

Fig. 6    eine schematische Darstellung einer Variante einer Erdeinbaugruppe in einer Seitenansicht,

Fig. 7    die Erdeinbaugruppe aus Fig. 6 in einer schematischen Draufsicht,

Fig. 8    eine schematische perspektivische Darstellung einer weiteren Ausgestaltung der erfindungsgemäßen Wärmepumpenvorrichtung,

Fig. 9    eine schematische Schnittdarstellung einer weiteren Variante der erfindungsgemäßen Wärmepumpenvorrichtung,

Fig. 10   eine schematische Darstellung einer weiteren Ausführungsform einer erfindungsgemäßen Wärmepumpenvorrichtung,

Fig. 11   eine schematische Darstellung einer nicht zur Erfindung gehörenden Ausführungsform einer Wärmepumpenvorrichtung,

Fig. 12   eine schematische Darstellung einer weiteren nicht zur Erfindung gehörenden Ausführungsform einer Wärmepumpenvorrichtung,

Fig. 13   eine schematische Darstellung der Kreisläufe einer erfindungsgemäßen Wärmepumpenvorrichtung und

Fig. 14   eine schematische Darstellung einer Ausführungsform der gesamten Wärmepumpenvorrichtung einschließlich Zusatzeinrichtungen.

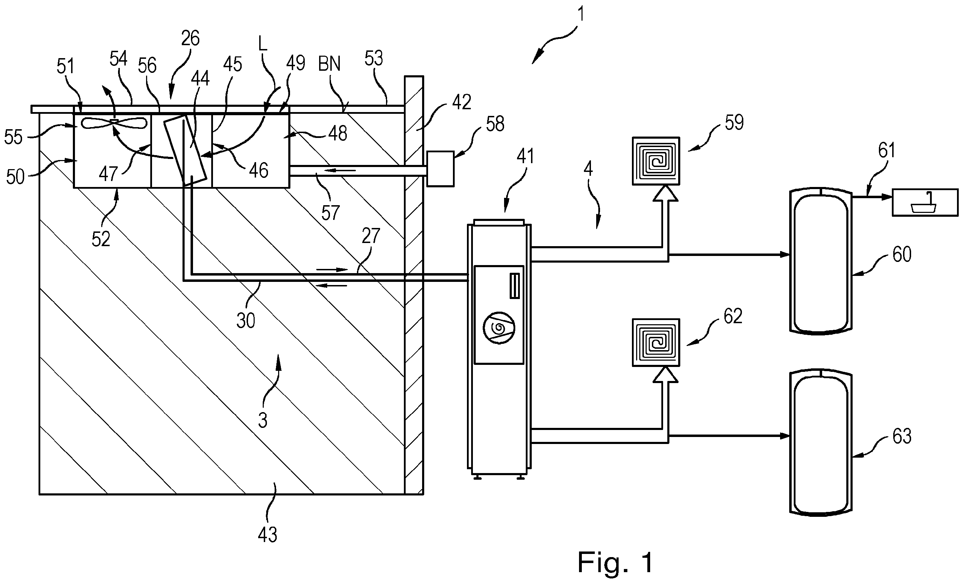

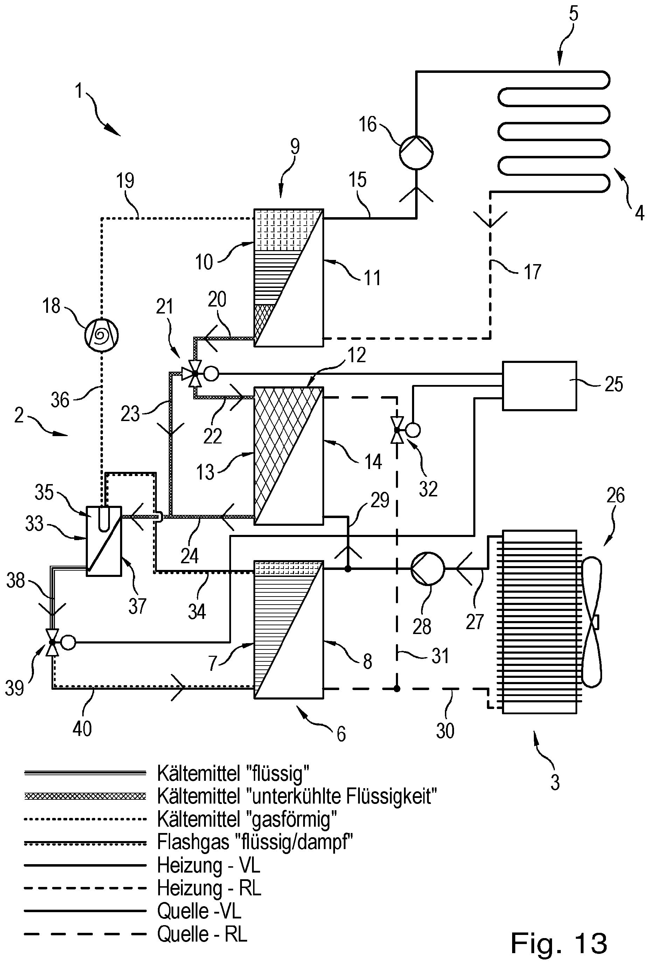

Die in Fig. 1 schematisch dargestellte Wärmepumpenvorrichtung 1 ist als sogenannte Splitanlage ausgeführt. Die Wärmepumpenvorrichtung 1 umfasst eine im Inneren eines Gebäudes angeordnete Wärmepumpeneinrichtung 41, in der der in Fig. 13 dargestellte Kältemittelkreislauf 2 mit dem Verdampfer 6, dem Kondensator 9, dem Verdichter 18, dem Sauggas-Überhitzer 33, dem Expansionsventil 39, dem Unterkühler 12 und dem Unterkühler-Kältemittelmischventil 21 verwendet werden. Von der Wärmepumpenvorrichtung 41 sind nach außen durch die Kellerwand 42 die Rücklaufleitung 27 und die Vorlaufleitung 30 des Luftkühler/Wärmetransportfluidkreislaufs 3 hindurchgeführt. Hierzu verlaufen die beiden Leitungen 27 und 30 teilweise im Erdreich 43 unterhalb des Bodenniveaus BN. Die Leitungen 27 und 30 sind mit der Wärmequelle 26 verbunden. Die Wärmequelle 26 umfasst als Hauptbestandteil einen Luftkühler 44. Dieser ist schräg in einem Kühlergehäuse 45 angeordnet. Das Kühlergehäuse 45 weist einen Lufteinlass 46 und einen Luftauslass 47 auf. Der Lufteinlass 46 und der Luftauslass 47 sind auf gegenüberliegenden Seiten des Kühlergehäuses 45 angeordnet. Der Luftkühler 44 besteht im Wesentlichen aus einem zur effektiven Wärmeübertragung bevorzugt wendelförmig verlaufenden Kupferrohr, das sowohl mit der Vorlaufleitung 30 als auch mit der Rücklaufleitung 27 verbunden ist, und aus Aluminiumlamellen zum besseren Wärmeübergang. In den Lufteinlass 46 mündet ein Zuführkanal 48 mit einer Einlassöffnung 49, die im Wesentlichen bündig zum Bodenniveau BN verläuft. Auf der dem Kühlergehäuse 45 gegenüberliegenden Seite mündet der Luftauslass 47 in einen Abströmkanal 50, der eine Auslassöffnung 51 aufweist, die im Wesentlichen bündig mit dem Bodenniveau BN ausgerichtet ist.

Das Kühlergehäuse 45, der Zuführkanal 48 und der Abströmkanal 50 sind als einheitliche Erdeinbaugruppe 52 ausgestaltet, d.h. sie können gemeinsam, z. B. mittels eines Krans in eine vorab ausgehobene Erdgrube eingesetzt werden, wobei anschließend Erdreich seitlich an die Erdeinbaugruppe 52 wieder herangefüllt wird. Beispielhaft sind in Fig. 1 Bodenplatten 53 verwendet worden und die Erdeinbaugruppe 52 ist so ausgestaltet, dass sie mittels eines Gitterrosts 54 begehbar abgedeckt ist.

Als Material für die Erdeinbaugruppe 52 kann ein verwitterungsbeständiges Stahlmaterial, z.B. ein beschichteter Stahl, verwendet werden. Der obere Abschluss könnte auch mittels Betonringen oder andern Betonelementen eingefasst werden, auf die sich dann der Gitterrost 54 (einteilig oder mehrteilig) abstützt.

Im Abströmkanal 50 ist eine Ventilatoreinrichtung 55 angeordnet, und zwar so, dass diese ebenfalls unterhalb des Bodenniveaus BN platziert ist. Das Kühlergehäuse 45 weist eine, eine Revisionsöffnung verschließende Revisionsklappe 56 auf. Durch Entnahme des Gitterrostes 54 kann sowohl die Revisionsklappe 56 geöffnet werden, so dass Zugang zum Luftkühler 44 gewährt ist, als auch ein Zugang zur Ventilatoreinrichtung 55, dem Abströmkanal 50 und dem Zuführkanal 48 erfolgen, so dass Wartungs-, Austausch- und Säuberungsmaßnahmen durchgeführt werden können.

In Fig. 1 ist die Luftströmung L schematisch eingezeichnet, die sich einstellt, wenn die Ventilatoreinrichtung 55 in Betrieb ist. Aus der Umgebung wird Luft über den Lufteinlass 46 angesaugt, durch den Zuführkanal 48 zum Lufteinlass 46 geleitet und durch den Luftkühler 44 hindurchgeführt. Anschließend tritt die Luft über den Luftauslass 47 in den Abströmkanal 50 aus, wird von der Ventilatoreinrichtung 55 angesaugt und strömt dann über die Auslassöffnung 51 wieder in die Umgebung. Anhand der schematischen Zeichnung ist zu erkennen, dass die Luftströmung L innerhalb der Erdeinbaugruppe 52 im Wesentlichen U-förmig umgeleitet wird, wobei die Symmetrieachse des U vertikal ausgerichtet ist. Die Zu- und Abströmung erfolgt somit nebeneinander, aber in ausreichendem Abstand diametral zum Luftkühler 44, so dass keine Kurzschlussströmung erfolgt. Das Kühlergehäuse 45 ist für diesen Vorgang entsprechend abgedichtet.

Im Luftkühler/Wärmetransportfluidkreislauf 3 befindet sich im vorliegenden Fall eine Sole, weshalb die beiden Leitungen 27 und 30 als Soleleitungen ausgestaltet sind. Im Luftkühler 44 wird der durchströmenden Luft Wärme entzogen und der Sole zugeführt. Hierdurch können Temperaturunterschiede von 2° bis 3°C zwischen der Vorlaufleitung 30 und der Rücklaufleitung 27 vorhanden sein.

Im vorliegenden Ausführungsbeispiel wird zusätzlich noch ein Abluftkanal 57 verwendet, der durch das Erdreich 43 geführt ist und in den Zuführkanal 48 mündet. Hierzu ist der Abluftkanal 57 durch die Kellerwand 42 hindurchgeführt und steht an seinem anderen Ende mit der Wohnraumlüftung 58 in Verbindung, die lediglich als schematischer Kasten dargestellt ist. Moderne Gebäude verfügen in aller Regel über eine solche Wohnraumlüftung 58, die zumeist auch einen Gegenstromwärmetauscher aufweist. Dennoch hat die Abluft, insbesondere in der Übergangszeit und Heizperiode eine höhere Temperatur als die Umgebungsluft, so dass zusätzliche erwärmte Luft über den Abluftkanal 57 dem Luftkühler 44 zugeführt wird und dessen Effektivität steigert.

Die Wärmepumpeneinrichtung 41 ist mit einem Wärmesenkenkreislauf 4 verbunden. Aufgrund der Tatsache, dass die Wärmepumpeneinrichtung 41 sowohl im Heizbetrieb als auch im Kühlbetrieb arbeiten kann, ist der Kreislauf 4 doppelt dargestellt. In der oberen Darstellung wird Wärme erzeugt, die der Raumheizung 59 und einem Wärmespeicher 60 zugeführt wird, dem auch das Warmwasser 61 entnommen wird. In der unteren Darstellung erfolgt im Kältebetrieb die Zuführung zur Raumkühlung (hier können wiederum die Heizkörper verwendet werden). Des Weiteren ist auch ein geeigneter Kältespeicher 63 vorgesehen.

Das besondere an der dargestellten Wärmepumpeneinrichtung 1 ist zunächst einmal die verwendete Erdeinbaugruppe 52, mittels der eine versenkte Anordnung unterhalb des Bodeniveaus BN sowohl des Luftkühlers 44 als auch der Ventilatoreinrichtung 55 stattfinden kann. Hierzu sind selbstverständlich auch der Lufteinlass 46 und Luftauslass sowie der zugehörige Zuführkanal 48 und Abströmkanal 50 unterhalb des Bodenniveaus BN platziert, wodurch im Außenbereich Platz gewonnen ist und zusätzlich die Geräuschentwicklung aufgrund des Erdeinbaus reduziert werden kann.

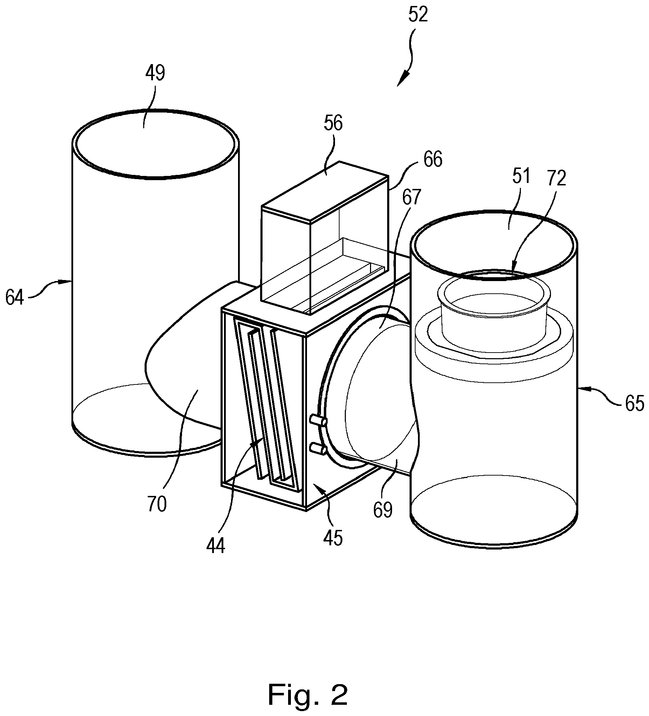

Im Folgenden wird anhand der Fig. 2 bis 5 eine alternative Ausgestaltung der Erdeinbaugruppe 52 näher erläutert. Die Erdeinbaugruppe 52 umfasst einen zylinderrohrförmigen Erdeinbauschacht 64, der aus einem beschichteten Stahlwerkstoff besteht. Der Erdeinbauschacht 64 ist sowohl am oberen Ende als auch am unteren Ende offen. Der Erdeinbauschacht 64 bildet einen Bestandteil des Zuführkanals 48. Des Weiteren umfasst die Erdeinbaugruppe 52 einen zweiten Erdeinbauschacht 65, der aus dem gleichen Material besteht und den gleichen Durchmesser aufweist. Im vorliegenden Fall beträgt dieser 1 m. Beide Erdeinbauschächte 64 und 65 sind mit ihrer Rohrachse vertikal angeordnet. Auch der Erdeinbauschacht 65 ist an seinem oberen und unteren Ende offen. Der Luftkühler 44 ist in einem quaderförmigen, aus Stahlplatten erzeugten Kühlergehäuse 45 untergebracht. Das Kühlergehäuse 45 weist auch eine Bodenplatte auf, um im Wesentlichen eine Kurzschlussströmung zu vermeiden. An der Oberseite des Kühlergehäuses 45 befindet sich ein Revisionsschacht 66 mit aufgesetzter Revisionsklappe 56. Der Lufteinlass 46 und der Luftauslass 47 sind als großzügige Kreisöffnungen ausgestaltet und jeweils von einem Aufsteckstutzen 67 und 68 umgeben. Auf diesen Aufsteckstutzen 67 und 68 sind quer verlaufende Rohre 69 und 70 aufgesteckt und mit diesen verbunden. Die Rohre 69 und 70 münden jeweils in die zugehörigen Erdeinbauschächte 64 und 65 und bilden mit diesen zusammen zum einen den Zuführkanal 48 und zum anderen den Abströmkanal 50.

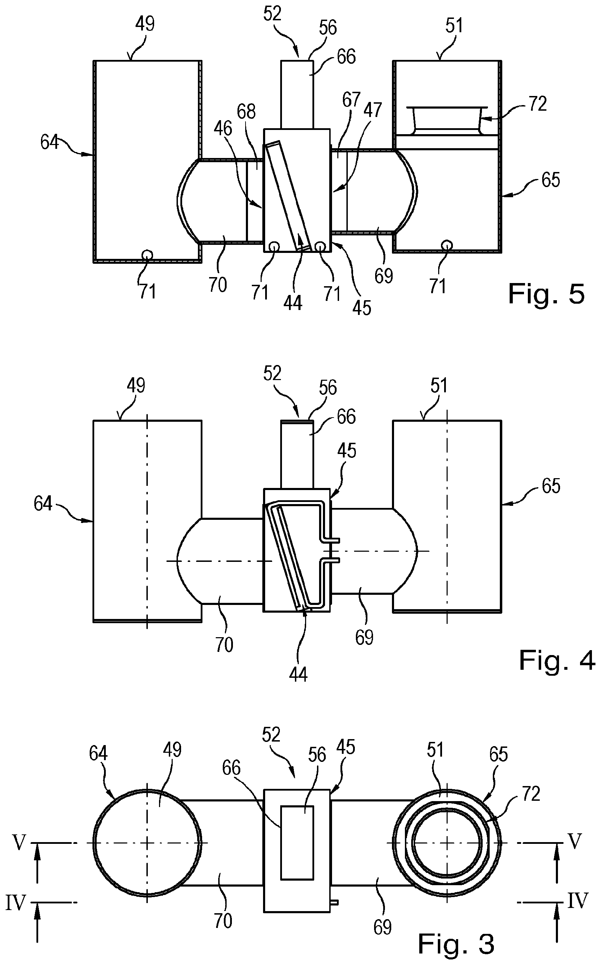

Wie insbesondere aus den Seitenansichten der Fig. 4 und 5 zu erkennen ist, ist aufgrund des schräg angeordneten Luftkühlers 44 der Lufteinlass 46 etwas tiefer angeordnet als der Luftauslass 47, so dass es einen leichten Versatz gibt. Der zugehörige Erdeinbauschacht 65 kann daher nach unten hin etwas kürzer ausfallen. Am oberen Ende sind die beiden Erdeinbauschächte 64 und 65 zusammen mit der Revisionsklappe 56 bündig ausgestaltet. Aus der Schnittdarstellung in Fig. 5 ist zu erkennen, dass am unteren Ende des Kühlergehäuses 45 und auch an den unteren Enden der Erdeinbauschächte 64 und 65 Drainageöffnungen vorhanden sind. Bei den Erdeinbauschächten 64 und 65 ist dies nicht zwingend erforderlich, weil diese unten offen sind. Beim Kühlergehäuse 45 muss für eine Abführung von Kondenswasser und Abtauwasser zwingend gesorgt werden. Entsprechende Öffnungen 71 können auch im Boden des Kühlergehäuses 45 angebracht sein.

Die Erdeinbaugruppe 52 wird zum entsprechenden Ableiten von Kondens- und Abtauwasser sowie für den Regenfall auf ein entsprechend mächtiges (z.B. 50 cm) Kiesbett gesetzt und dann mit Erdreich umgeben, bis nur noch die Einlassöffnung 49, die Auslassöffnung 51 und die Revisionsklappe 56 am Bodenniveau BN verbleiben.

Des Weiteren ist aus den Figuren zu sehen (siehe insbesondere Schnittdarstellung in Fig. 4), dass aus dem Kühlergehäuse 45 die Anschlüsse für die Leitungen 27 und 30 ragen. Diese werden selbstverständlich vor Zuschütten mit Erdreich angeschlossen und verlegt. Des Weiteren ist zu erkennen, dass in dem Erdeinbauschacht 65 eine ringförmige Anbringeinrichtung 72 mit nach innen ragendem Aufsetzflansch vorgesehen ist. Diese ist oberhalb der Verbindungsöffnung zwischen dem Rohr 69 und dem Erdeinbauschacht 65 platziert und dient zur sichern Anordnung der Ventilatoreinrichtung 55. Hierdurch und aufgrund des relativ großen Durchmessers des Erdeinbauschachts 65 ist die Ventilatoreinrichtung für Servicemaßnahmen von oben zugänglich. Die Erdeinbauschächte 64 und 65 können durch entsprechend angepasste runde Gitterroste 54 begeh- bzw. befahrbar verschlossen werden. Die Ventilatoreinrichtung 55 befindet sich dann unterhalb der entsprechenden Gitterroste 54.

Ergänzend sei noch erwähnt, dass das Material für das Kühlergehäuse 45 wiederum ein beschichtetes Stahlmaterial sein kann. Die Rohre 69 und 70 können ebenfalls aus einem beschichteten Stahlmaterial sein. Es besteht aber auch die Möglichkeit, diese aus Kunststoff zu fertigen und hier auf Standardrohre zurückzugreifen, so dass eine unkomplizierte Längenanpassung möglich ist. Auch existieren entsprechende Abdichtungsmöglichkeiten zu den zugehörigen Erdeinbauschächten 64 und 65.

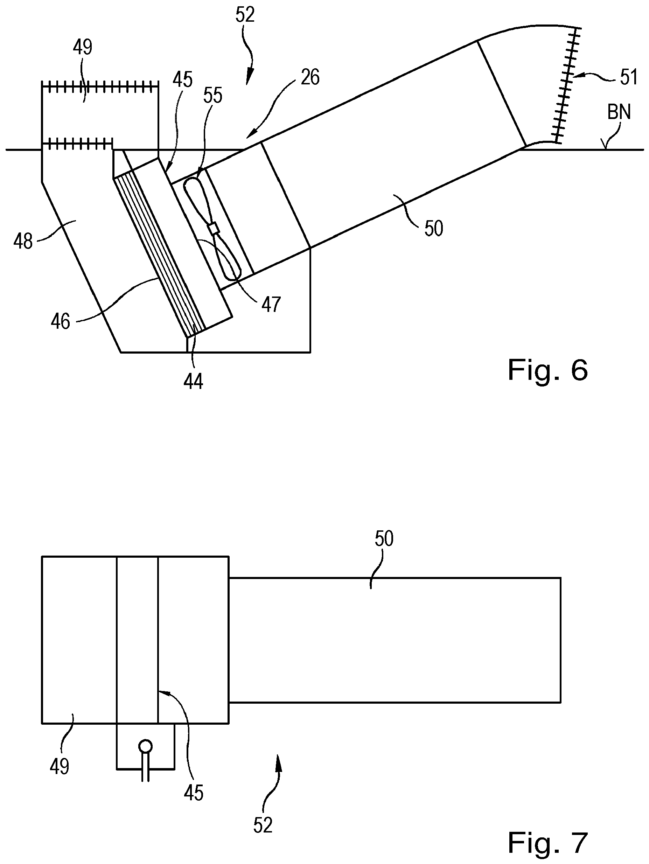

Anhand der Fig. 6 und 7 wird eine alternative Ausgestaltung einer Erdeinbaugruppe 52 beschrieben. Es soll im Folgenden nur auf die wesentlichen Unterschiede eingegangen werden, weshalb unter Verwendung gleicher Bezugsziffern für gleiche und wirkungsgleiche Elemente ergänzend auf die obige Beschreibung Bezug genommen wird.

Im vorliegenden Fall ist der Abströmkanal 50 als schräges, das Bodenniveau BN durchbrechendes Abluftrohr ausgestaltet, das an seinem gebogenen Ende mit einem Gitter versehen ist. Auch der Zuführkanal 48 ragt über das Bodenniveau BN hinaus und ist mit einem Gitter abgedeckt. Die Anordnung oberhalb des Bodenniveaus BN sowohl der Einlassöffnung 49 als auch der Auslassöffnung 51 verhindert optimal das Eindringen von sich zumindest in der Umgebung ansammelnden Regenwasser. Die Einlassöffnung 49 kann auch seitlich ausgestaltet sein, so dass auch verhindert werden könnte, dass sich im Herbst Blätter sowohl auf der Einlassöffnung 49 als auch auf der Auslassöffnung 51 ansammeln, die entfernt werden müssten. Die Ventilatoreinrichtung 55 ist im vorliegenden Fall an die Schräglage des Luftkühlers 44 angepasst und befindet sich ebenfalls schräg im Abströmkanal 50 unterhalb des Bodenniveaus BN. Eine entsprechende Revisionsöffnung muss vorgesehen werden. Die gesamte Einbaugruppe ist entsprechend an diese Form angepasst. Der Anschluss der Leitungen 27 und 30 kann im vorliegenden Fall seitlich erfolgen, wie aus Fig. 7 zu entnehmen ist.

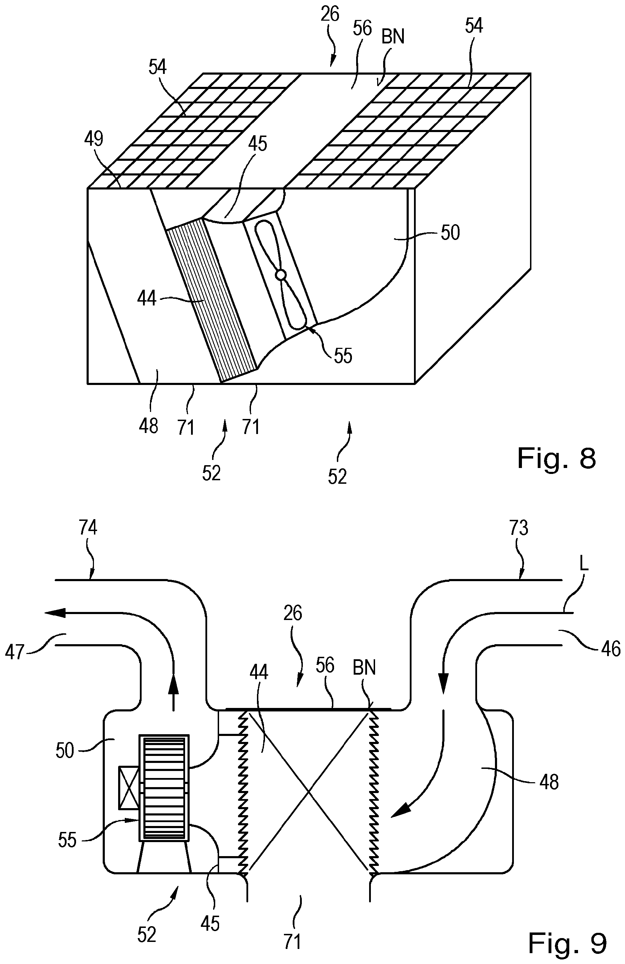

Anhand der Fig. 8 wird nunmehr ein weiteres Ausführungsbeispiel einer Erdeinbaugruppe 52 näher erläutert. Auch hier soll nur auf die wesentlichen Unterschiede zu den vorangegangenen Ausführungsbeispielen eingegangen werden, weshalb unter Verwendung von gleichen Bezugsziffern auf gleiche und wirkungsgleiche Bauelemente Bezug genommen werden soll.

Diese Erdeinbaugruppe 52 ist ähnlich wie die Erdeinbaugruppe 52 aus der schematischen Fig. 1, als Block ausgestaltet, der so im Erdreich 43 versenkt werden kann. Die Ventilatoreinrichtung 50 ist wiederum an die Schräglage des Luftkühlers 44 angepasst und der Zuführkanal 48 und der Abströmkanal 50 sind entsprechend angeformt. Die Oberseite wird durch Gitterroste 54 sowie eine Revisionsklappe 56 abgedeckt.

Anhand der Fig. 9 wird eine weitere Ausführungsform der erfindungsgemäßen Erdeinbaugruppe 52 näher erläutert. Es soll in der Folge nur auf die wesentlichen Unterschiede eingegangen werden, weshalb unter Verwendung gleicher Bezugsziffern auf gleiche und wirkungsgleiche Elemente der vorangegangenen Ausführungsbeispiele Bezug genommen wird.

Es handelt sich wiederum um eine kastenförmige Konstruktion. Im vorliegenden Fall ist der Luftkühler 44 gerade eingebaut und die Drainageöffnung 71 befindet sich an der Unterseite. Anstelle einer axial wirkenden Ventilatoreinrichtung 55 ist im vorliegenden Fall eine radial wirkende Ventilatoreinrichtung 55 im Abströmkanal 50 eingebaut worden. Des Weiteren werden im vorliegenden Fall die Einlassöffnung 49 und die Auslassöffnung 51 durch zusätzlich aufgesetzte Winkelrohre 73 und 74 gebildet, so dass die Einlassöffnung 49 und die Auslassöffnung 51 voneinander wegweisen. Diese Baugruppe verhindert effektiver einen Strömungskurzschluss, so dass sämtliche Elemente näher aneinander herangerückt werden können. Die Länge der Einheit ließe sich reduzieren. Die Winkelrohre 73 und 74 sind naturgemäß über das Bodenniveau BN hinausgeführt, das im Wesentlichen mit der Oberseite der Kastenkonstruktion bündig ausgeführt ist, so dass über die Revisionsklappe 56 Zugriff auf den Luftkühler 44 genommen werden kann. Die Konstruktion bietet einen Schutz gegen eindringendes Regenwasser und eine Blätteransammlung im Herbst.

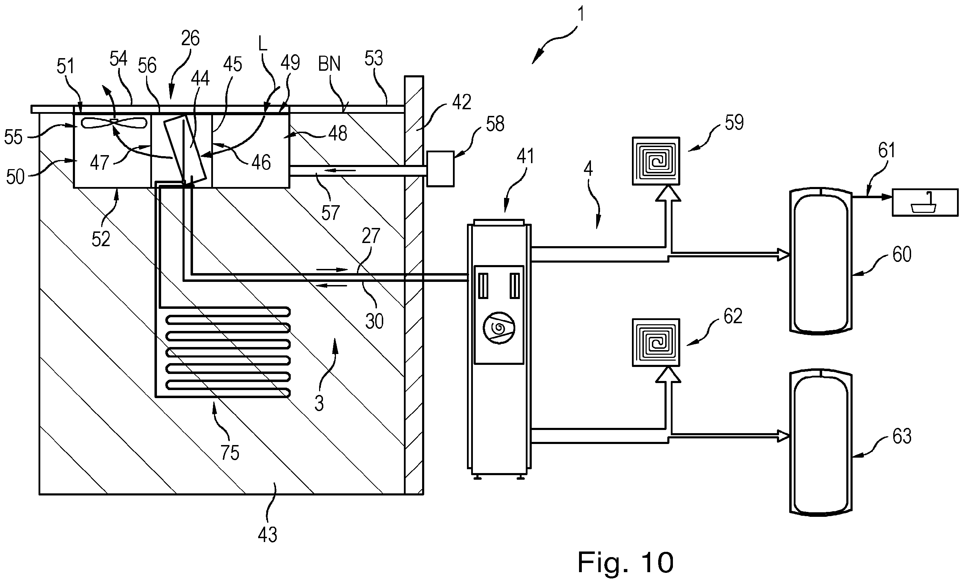

Anhand der Fig. 10 wird eine alternative Ausgestaltung der Wärmepumpenvorrichtung 1 näher beschrieben. Es soll nur auf die wesentlichen Unterschiede zur Wärmepumpenvorrichtung 1 wie sie in Fig. 1 dargestellt ist, Bezug genommen werden. Es wird daher mit Hilfe von gleichen Bezugsziffern ergänzend auf die vorangegangene Beschreibung verwiesen.

Der wesentliche Unterschied besteht lediglich darin, dass zusätzlich zum Luftkühler/Wärmetransportfluidkreislauf 3 aus Fig. 1 in diesen ein Sole-Erd-Kollektor 75 eingebunden wird. Hierdurch kann das Temperaturniveau innerhalb der Soleleitung nochmals verbessert werden. Der Sole-Erd-Kollektor 75 ist entsprechend im Erdreich angeordnet. Hier besteht die Möglichkeit, diesen unterhalb der Erdeinbaugruppe 52 oder daneben zu platzieren.

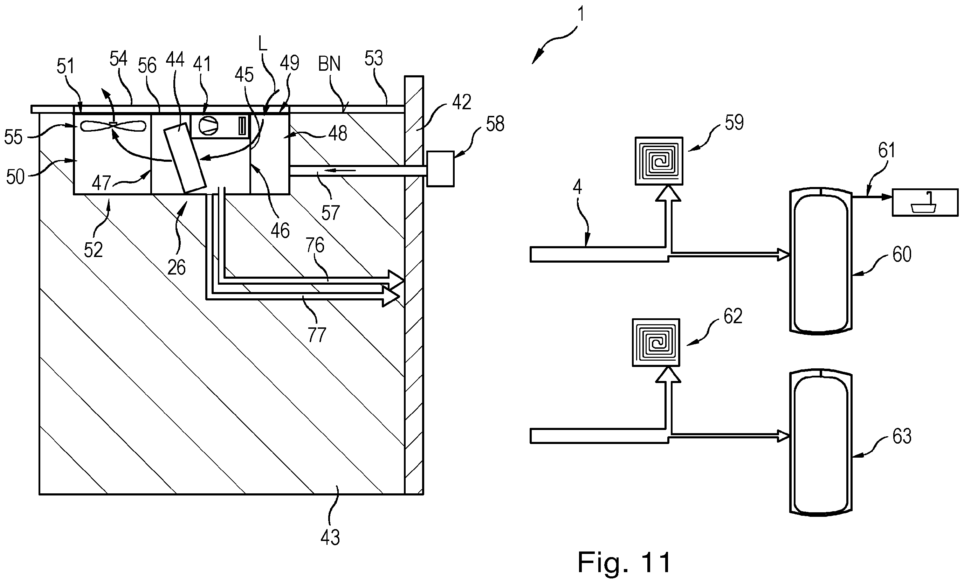

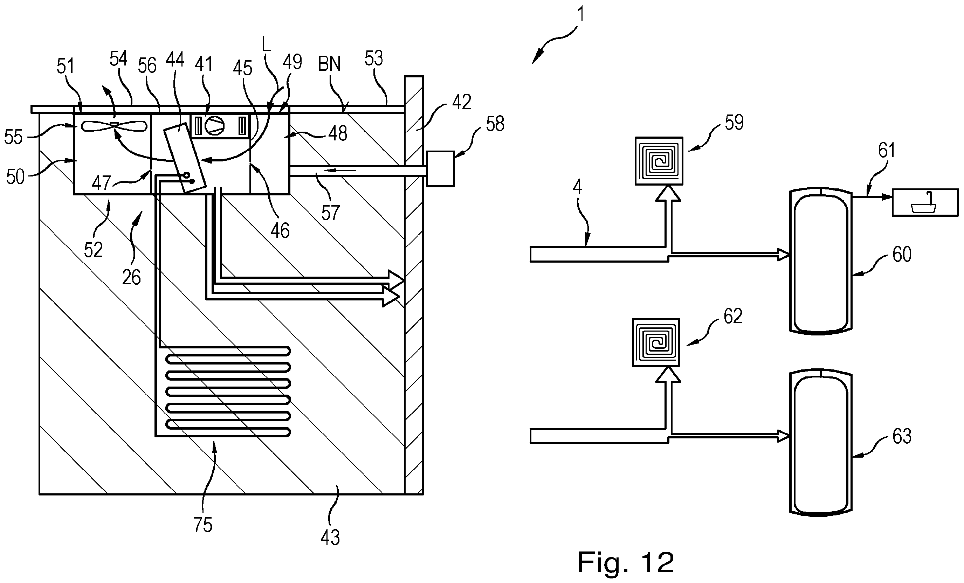

Anhand der Fig. 11 und 12 wird nunmehr eine alternative Ausgestaltung einer Wärmepumpenvorrichtung 1 schematisch erläutert. Es soll nur auf die wesentlichen Unterschiede zur eingegangen werden, weshalb unter Zuhilfenahme der gleichen Bezugsziffern ergänzend auf die obige Beschreibung Bezug genommen wird.

Der wesentliche Unterschied der Ausführungsform der Fig. 11 und der Fig. 1 besteht darin, dass die Wärmepumpeneinrichtung 1 als Kompaktanlage und nicht wie in Fig. 1 als Splitanlage ausgestaltet ist. Sämtliche Elemente der Wärmepumpeneinrichtung 41 sind demnach in die Erdeinbaugruppe 52 integriert und stehen unmittelbar in wärmetechnischer Kopplung mit dem Luftkühler 44 in Verbindung. Entsprechend kann auf die Soleleitung ins Innere des Gebäudes verzichtet werden. Stattdessen werden geeignete Wärme- bzw. Kältetransportleitungen 76 bzw. 77 verwendet, die durch die Kellerwand 42 ins Gebäude geführt werden und dann entsprechend mit dem Wärmesenkenkreislauf 4 in Interaktion treten. Die entsprechenden Leitungen 76, 77 sind selbstverständlich jeweils als Kreislaufleitungen ausgestaltet. Als Wärme- bzw. Kältetransportmittel kann im vorliegenden Fall Wasser dienen. Die Wärmepumpenvorrichtung 1 kann als Luft-Wasser-Direktverdampfereinheit betrieben werden.

Alternativ zu der vorangegangenen Ausgestaltung kann gemäß Fig. 12 zusätzlich noch ein Sole-Erd-Kollektor 75 eingebunden werden. Es handelt sich dann um eine Luft-Sole-Wasser-Direktverdampferkombination.

Die in der Fig. 13 dargestellte Wärmepumpenvorrichtung wird in der Folge nur hinsichtlich ihrer wesentlichsten Bestandteile beschrieben. Selbstverständlich können weitere Bestandteile vorgesehen sein.

Die Wärmepumpenvorrichtung 1 umfasst im Wesentlichen drei Kreisläufe (siehe Fig. 13).

Dies sind zum einen der Kältemittelkreislauf 2 und zum anderen der Luftkühler/Wärmetransportfluidkreislauf 3 sowie ein Wärmesenkenkreislauf 4.

Der Kältemittelkreislauf 2 wird von einem Kältemittel durchströmt, das je nach Station des Kältemittelkreislaufs 2 flüssig, gasförmig oder als sog. Flashgas (Gemisch aus flüssig- und dampfförmig bzw. gasförmig) vorliegt. Zum Einsatz kommen können die üblichen Kältemittel für Wärmepumpenvorrichtungen, wie z.B. R407C, Propan, im Wesentlichen alle HFKW (Fluorkohlenwasserstoffe) und alle HFO (natürliche) Kältemittel, etc. Der Wärmequellen-/Wärmetransportfluidkreislauf 3 ist mit einem Wärmetransportfluid befüllt, das bei den üblichen Außentemperaturen, die in den gemäßigten Breitengraden, z.B. Deutschland, vorkommen, nicht gefriert und strömungsfähig bleibt. In vielen Fällen kommt Wasser mit einem Kälteschutzmittel, insbesondere eine Sole, zum Einsatz. Der Wärmesenkenkreislauf 4 ist üblicherweise mit Wasser gefüllt und weist einen Wärmetauscherbereich 5 auf, der mit dem Heiz- und/oder Warmwasserkreislauf eines Heizsystems, z. B. für ein Gebäude, in Verbindung steht. Der Heizkreislauf kann die üblichen Einrichtungen, wie Pufferspeicher, Einbindung eines Solarmoduls etc. umfassen.

Der Kältemittelkreislauf 2 und der Luftkühler/Wärmetransportfluidkreislauf 3 sind zunächst einmal mittels eines Verdampfers 6 wärmetechnisch gekoppelt. Auf der Primärseite 7 wird der Verdampfer 6 von dem Kältemittel durchströmt und auf der Sekundärseite 8 wird der Verdampfer 6 von dem Wärmetransportfluid durchströmt. Die Funktion ist demnach ähnlich einem Wärmetauscher. Des Weiteren ist der Kältemittelkreislauf 2 mittels eines Kondensators 9 mit dem Wärmesenkenkreislauf 4 wärmetechnisch gekoppelt. Auf der Primärseite 10 wird der Kondensator 9 von dem Kältemittel durchströmt und auf der Sekundärseite 11 wird der Kondensator 9 von dem Fluid des Wärmesenkenkreislaufs 4 durchströmt. Auch hier ist die Funktion ähnlich eines Wärmetauschers.

Der Kältemittelkreislauf 2 und der Luftkühler/Wärmetransportfluidkreislauf 3 sind zusätzlich noch mittels eines Unterkühlers 12 wärmetechnisch gekoppelt. Auf der Primärseite 13 des Unterkühlers 12 strömt ein eingestellter Anteil des Kältemittels (0-100 %) und auf der Sekundärseite 14 strömt ein Anteil des Wärmetransportfluids (0-100 %).

Der Wärmesenkenkreislauf 4 weist eine Vorlaufleitung 15, eine Förderpumpe 16 und eine Rücklaufleitung 17 auf. Die Temperatur im Wärmesenkenkreislauf 4 liegt üblicherweise im Bereich von 30° C bis 65° C und die Spreizung zwischen Vorlauf und Rücklauf beträgt 5-10° K. Die Temperaturen hängen sehr stark vom jeweiligen Bedarf des Heizsystems ab. Die Erwärmung des Wärmesenkenfluids im Kondensator 9 erfolgt zwischen der Rücklaufleitung 17 und der Vorlaufleitung 15.

Der Kältemittelkreislauf 2 umfasst weiter einen Verdichter (Kompressor) 18, der dem Kondensator 9 vorgeordnet ist und von dem aus eine Heißgasleitung 19 zum Kondensator 9 führt. In der Heißgasleitung liegt das Kältemittel gasförmig vor, und zwar in einem Temperaturbereich von +45° C bis +110° C. Auf der Primärseite des Kondensators 9 erfolgt eine Abkühlung des Kältemittels und eine Wärmeabgabe an die Sekundärseite 11. Diese abgegebene Kondensationswärme setzt sich üblicherweise aus drei Teilen zusammen. Ungefähr 10 % Energie werden durch die Enthitzung des gasförmigen Kältemittels gewonnen. Durch die Verflüssigung (Phasenwechsel) wird die meiste Wärme abgegeben, ca. 87 - 88 %. Ein kleiner Teil der Wärmeabgabe führt zur Unterkühlung des Kältemittels, das entspricht ca. 2 - 3 % der Energiemenge. Das Kältemittel tritt am Kondensator 9 über eine Kondensationsleitung 20 in flüssiger Form aus. Der Temperaturbereich in der Kondensationsleitung kann zwischen +20° C bis +68°° C liegen und hängt maßgeblich von der Art des verwendeten Kältemittels ab.

Die Kondensationsleitung 20 mündet in ein Unterkühler-Kältemittelmischventil 21. Eine erste Ausgangsleitung 22 verbindet das Unterkühler-Kältemittelmischventil 21 mit der Primärseite 13 des Unterkühlers 12. Eine zweite Ausgangsleitung 23 verbindet das Unterkühler-Kältemittelmischventil 21 mit einer Ausgangsleitung 24 des Unterkühlers 12. Die zweite Ausgangsleitung 23 bildet somit eine Bypassleitung für das Kältemittel zur Umgehung des Unterkühlers 12.

Das Unterkühler-Kältemittelmischventil 21 steuert bzw. regelt den Kältemittelstrom durch den Unterkühler 12. Hierzu ist das Unterkühler-Kältemittelmischventil 21 mit einer Regeleinrichtung 25 verbunden, die in Abhängigkeit von einem oder mehrerer Parameter den Öffnungswinkel des Unterkühler-Kältemittelmischventils 21 einstellt. Bei den Parametern handelt es sich um mindestens einen der nachfolgenden Größen oder Zustände: die Außentemperatur, der Druck des Kältemittels, die Temperatur des Kältemittels, der Druck des Wärmetransportfluids, die Temperatur des Wärmetransportfluids, die Rücklauftemperatur im Wärmesenkenkreislauf 4, die Vorlauftemperatur im Wärmesenkenkreislauf 4, die Stromaufnahme (Leistung des Verdichters) 18 im Kältemittelkreislauf 2, einen Vereisungszustand im Wärmequellen-/Wärmetransportfluidkreislauf, den Flüssigkeitsstand des Kältemittels in dem Verdampfer 6 oder die gewünschte Unterkühlungstemperatur etc.

Der Luftkühler/Wärmetransportfluidkreislauf 3 steht mit einer Wärmequelle 26 in Wechselwirkung. Bei der Wärmequelle 26 handelt es sich hauptsächlich um einen Luftkühler 44. Durch den Luftkühler 44 wird Außenluft angesaugt, wodurch deren Temperatur gesenkt wird. Die Wärme wird von dem Wärmetransportfluid im Luftkühler/Wärmetransportfluidkreislauf 3 aufgenommen. Eine Kombination von Wärmequellen ist selbstverständlich möglich. Der Luftkühler/Wärmetransportfluidkreislauf 3 weist eine Rücklaufleitung 27 auf, die zum Verdampfer 6 führt. In der Rücklaufleitung 27 ist eine Förderpumpe 28 integriert. Von der Rücklaufleitung 27 führt eine Stichleitung 29 zur Sekundärseite 14 des Unterkühlers 12. Eine Vorlaufleitung 3 des Luftkühler/Wärmetransportfluidkreislaufs 3 verbindet die Sekundärseite 8 des Verdampfers 6 mit der Wärmequelle 26. Die Temperatur in der Rücklaufleitung 27 beträgt im Normalbetrieb zwischen -22° C bis +40° C. Die Spreizung zwischen der Vorlaufleitung 30 und der Rücklaufleitung 27 beträgt ca. 2° - 4° K. Das Wärmetransportfluid gibt dem Verdampfer 6 Wärme an das Kältemittel auf der Primärseite 7 ab. Hierdurch wird das flüssige Kältemittel wieder in den gasförmigen Zustand überführt. In die Vorlaufleitung 30 mündet eine von der Sekundärseite 14 des Unterkühlers 12 kommende Zulaufleitung 31. Die Sekundärseite 14 des Unterkühlers 12 wird somit parallel zum Luftkühler 44 und der Sekundärseite 8 des Verdampfers 6 betrieben (Parallelschaltung)

In der Zulaufleitung 31 ist ein Regelventil 32 angeordnet, mit dem der Wärmetransportfluidstrom durch die Sekundärseite 14 des Unterkühlers 12 einstellbar bzw. regelbar ist. Das Regelventil 32 steht mit der Regeleinrichtung 25 in Verbindung. Die Regelung des Regelventils 32 erfolgt ebenfalls nach einem oder mehreren der bereits für die Regelung des Unterkühler-Kältemittelmischventils 21 genannten Parameter.

Der Kältemittelkreislauf 2 umfasst einen Sauggas-Überhitzer 33, der dem Verdichter 18 vorgeordnet ist. Aus dem Verdampfer 6 führt eine Saugleitung 34 zur Primärseite 35 des Sauggas-Überhitzers 33 und die Primärseite 35 des Sauggas-Überhitzers 33 ist über die Zuleitung 36 mit dem Verdichter 18 verbunden. Eine Sekundärseite 37 des Sauggas-Überhitzers 33 steht mit der von der Primärseite 13 des Unterkühlers 12 kommenden Ausgangsleitung 24 in Verbindung. Eine mit der Sekundärseite 37 des Sauggas-Überhitzers 33 in Verbindung stehende Ausgangsleitung 38 führt zu einem Expansionsventil 39. Das Expansionsventil 39 steht ebenfalls mit der Regeleinrichtung 25 in Verbindung und ist in Abhängigkeit verschiedenster Regelparameter einstellbar bzw. regelbar. In Frage kommen können auch hier wiederum ein oder mehrere der bereits o.g. Parameter in Hinblick auf die Regelung des Unterkühler-Kältemittelmischventils 21. Das Expansionsventil 39 steht über eine Einspritzleitung 40 mit der Primärseite 7 des Verdampfers 6 in Verbindung.

Über das Expansionsventil 39 ist auch der Flüssigkeitsstand des Kältemittels auf der Primärseite 7 des Verdampfers 6 einstellbar. Nachdem der Verdampfer 6 auf der Primärseite 7 mit einem hohen Flüssigkeitsanteil gefahren wird, üblicherweise im Bereich von 95 - 97 %, gelangt über die Saugleitung 34 sog. Flashgas in den Sauggas-Überhitzer 33. Die Temperatur in der Saugleitung 34 beträgt je nach Betriebsart zwischen -25° C bis +25° C. Der Sauggas-Überhitzer 33 sorgt nunmehr dafür, dass Flüssigkeitsanteile, die noch in der Saugleitung 34 enthalten sind, ausgetrieben werden, so dass in der Zuleitung 36 nur noch gasförmiges Kältemittel dem Verdichter 18 zugeführt wird. Betriebsbedingt sollen gar keine oder nur ganz geringe Flüssigkeitsanteile dem Verdichter 18 zugeführt werden, damit dieser optimal arbeitet.

Das Expansionsventil 39 sorgt für einen Druckabbau im Kältemittel, wodurch im Anschluss an das Expansionsventil 39 in der Einspritzleitung 40 ebenfalls Flashgas vorliegt.

Der genauen, betriebspunktabhängigen Regelung mittels der Regeleinrichtung 25 kommt bei dem vorliegenden System große Bedeutung zu, wenn ein optimaler Betrieb über einen großen Bereich an Wärmebedarf im Wärmesenkenkreislauf 4 in Abhängigkeit der Außentemperaturen gefahren werden soll. Es existieren auch Betriebsbedingungen, bei denen eine Unterkühlung durch den Unterkühler 12 eher nicht gewünscht ist.

In der Folge wird die Wirkungs- und Funktionsweise der oben beschriebenen Wärmepumpenvorrichtung 1 näher erläutert.

Im Bereich des Luftkühler/Wärmetransportfluidkreislaufs 3 kommt es in Abhängigkeit der Betriebsbedingungen, insbesondere bei niedrigen Außentemperaturen, zum Vereisen im Bereich der Wärmequelle 26 (hauptsächlich des Luftkühlers 44). Diese Vereisung senkt die Effektivität und muss regelmäßig durch einen Abtauvorgang beseitigt werden. Hierzu gibt es bei bekannten Wärmepumpenvorrichtungen in aller Regel zwei Möglichkeiten. Zum einen eine Kreislaufumkehr im Kältemittelkreislauf. Hierdurch wird Wärme aus dem Wärmesenkenkreislauf 4 in den Luftkühler/Wärmetransportfluidkreislauf 3 überführt, was in der Folge zur Enteisung beiträgt. Der Verdampfer 6 wird hierbei zum Kondensator. Des Weiteren oder in Kombination besteht die Möglichkeit, dass im Bereich der Wärmequelle 26 Heizeinrichtungen, z.B. elektrische Heizeinrichtungen vorgesehen sind. Sowohl die Kreislaufumkehr als auch die Heizeinrichtungen können auch bei der erfindungsgemäßen Wärmepumpenvorrichtung 1 eingesetzt werden. Die Auswahl hängt sehr stark von den Betriebsbedingungen und den Außentemperaturen ab.

Die erfindungsgemäße Wärmepumpenvorrichtung 1 kann aber auch auf andere Weise eine Abtauung herbeiführen (es ist eine dynamische und/oder zyklische Abtauung möglich). Diese ist insbesondere vorteilhaft in einem Außentemperaturbereich von (-10° C) -5° C bis +12° C. Bei der Abtauung wird das Regelventil 32 sehr weit oder ganz geöffnet, so dass ein sehr großer Anteil des Wärmetransportfluids durch den Unterkühler 12 strömt. Hierdurch wird das Wärmetransportfluid erwärmt und diese Wärme bis in den Bereich der Wärmequelle 26 geleitet. Die Dauer der Abtauung ist einstellbar (z.B. von Aus bis 15 Minuten maximal). Zwar sinkt in dieser Zeit die Effektivität im Kondensator 9, so dass weniger Wärme in den Wärmesenkenkreislauf 4 eingetragen wird; allerdings wird auch keine Wärme aus den Wärmesenkenkreislauf 4 abgeführt, wie bei der Prozessumkehr. Der Kältemittelkreislauf 2 arbeitet weiter in derselben Kreislaufrichtung wie im Normalbetrieb. In den gemäßigten Breiten, insbesondere Deutschland, ist der angegebene Außentemperaturbereich ein häufig vorkommender Außentemperaturbereich, weshalb sich die Abtauung sehr oft verwenden lässt. Erst bei niedrigeren Außentemperaturen müssen andere Maßnahmen, wie z.B. durch zusätzliche Heizelemente oder Prozessumkehr eingesetzt werden.

Der Sinn und Zweck des Unterkühlers 12 besteht im Normalbetrieb hauptsächlich darin, dass insbesondere bei höheren Vorlauftemperaturen (z.B. in der Vorlaufleitung 15) der Kältemitteldruck und die Kältemitteltemperatur im Unterkühler 12 abgebaut werden. Die Wärme wird dem Wärmetransportfluid zugeführt. Durch den Abbau des Kältemitteldrucks und der Kältemitteltemperatur lässt sich auch die elektrische Aufnahmeleistung des Verdichters 18 reduzieren. Es ist demnach möglich, mit einem kleineren Verdichter eine höhere Leistung (Heizleistung) zu erzielen. Durch das Mischen der Kältemittelmassenströme mittels des Unterkühler-Kältemittelmischventils 21 ergibt sich eine Enthalpiedifferenz, insbesondere bei den erwähnten hohen Vorlauftemperaturen. Ein weiterer Vorteil besteht darin, dass durch die Erwärmung des Wärmetransportfluids mittels des Unterkühlers 12 die Verdampfungstemperatur im Verdampfer 6 zu steigen beginnt. Das bedeutet, je höher die Vorlauftemperatur z.B. in der Vorlaufleitung 15 ist, desto höher ist die Verdampfungstemperatur.

Des Weiteren kann mit Hilfe der Regeleinrichtung 25 eine weitere Funktion erfüllt werden. Nach Stillstand der Wärmepumpenvorrichtung 1 kann ein Druckausgleich im Kältemitteikreislauf 2 erfolgen. Hierzu wird das Regelventil 32 im Luftkühler/Wärmetransportfluidkreislauf 3 über einen bestimmten Zeitraum geöffnet und wieder geschlossen, bis ein gewünschter Druckabbau im Kältemittelkreislauf 2 erzielt wurde. Hierdurch kann ein entlastetes Wiederanfahren des Verdichters 18 erfolgen, ohne anderweitig in den Kältemittelkreislauf 2 einzugreifen.

Auch die Verwendung des Sauggas-Überhitzers 33 führt zu einer zusätzlichen Nutzung der Unterkühlungsenergie in dem System, wobei gleichzeitig der Verdichter 18 vor Flüssigkeitsschäden geschützt werden kann.

Aufgrund der geregelten Verschaltung des Unterkühlers 12 sowohl auf seiner Primärseite 13 als auf seiner Sekundärseite 14, kann eine Unterkühlungswärme im Bereich von 5° - 25° K zur Effizienzsteigerung genutzt werden. Herkömmliche Systeme werden mit max. 2° - 3° K Unterkühlung betrieben. Zumindest ein Teil der Unterkühlungswärme kann dem System wieder zugeführt werden. Die Unterkühlungswärme entsteht im physikalischen Betrieb des Phasenwechsels (gasförmig wird flüssig) und wird bei herkömmlichen Systemen nicht oder nur im ganz geringen Temperaturbereich genutzt. Vor dem Expansionsventil 39 soll das Kältemittel immerzu 100 % flüssig anstehen, wird dann durch das Expansionsventil 39 in die Einspritzleitung 40 in den Verdampfer 6 geleitet und kann dort wieder Energie aus dem Wärmequellen-Transportfluidkreislauf 3 aufnehmen. Aufgrund der geregelten Unterkühlung mittels des Unterkühler-Kältemittelmischventils 21 und des Regelventils 32 ist eine größere Kälteleistung möglich und es ist für den jeweiligen Betriebszustand die optimale Unterkühlung zu erreichen. Eine zu starke Unterkühlung ist auch nicht immer sinnvoll. Vor allem bei niedrigen Temperaturen kann dies zu Leistungsverlust führen. Das Kältemittel steht somit bei vielen Betriebsbedingungen vor dem Expansionsventil 39 mit einer geringeren Temperatur an, wodurch sich auch ein höherer Füllgrad der Primärseite des Verdampfers 6 erzielen lässt. Dadurch werden die Kälteleistung und damit verbunden auch die Heizleistung gesteigert und der Leistungsgrad COP erhöht. Zudem kann man mit kleineren Verdichtern 18 und kleineren Bauteilen eine höhere Kälteleistung bzw. Heizleistung erzielen.

Durch gezieltes Regeln der Primär- und Sekundärseite 13, 14 des Unterkühlers 12 wird die Temperatur im Verdampfer 6 erhöht bzw. konstant gehalten. In der Folge vereist der Bereich der Wärmequelle 26 weniger und muss deshalb auch seltener abgetaut werden. Hierdurch wird Abtauenergie eingespart. Die Wärmepumpenvorrichtung 1 lässt sich vollständig oder teilweise mit einer Photovoltaikanlage betreiben.

In der Folge kann der Verdampfer 6 mit mehr flüssigem Kältemittel geflutet werden, wodurch über den Verdampfer 6 mehr Wärmeenergie aufgenommen werden kann. Der Flüssigkeitsanteil beträgt zwischen 95 und 97 %. Bei herkömmlichen Systemen wird mit einem maximalen Flüssigkeitsanteil von ca. 70 % gearbeitet.

Die erfindungsgemäße Wärmepumpenvorrichtung 1 wurde anhand eines vereinfachten Kreislaufs erläutert. Selbstverständlich können zusätzliche Elemente und Einrichtungen eingebunden oder angrenzend bzw. in Kombination verwendet werden. Möglich ist z.B. der Einsatz eines weiteren Unterkühlers oder eines Unterkühlers mit dem ein dritter Mediumkreislauf betrieben wird. Mit diesem kann z.B. während eines Kühlbetriebs die Abwärme zu Heizzwecken und/oder zur Warmwasserbereitung genutzt werden.

Der Aufbau und die Funktion eines Sauggasüberhitzers 33 ist z.B. in der EP 1 876 402 A2 näher beschrieben. Dieser kann in entsprechender Weise ausgerüstet bzw. angesteuert sein. Von Vorteil ist insbesondere die dort erwähnte Heißgaskühlung.

Im Folgenden wird noch kurz auf die physikalischen Zusammenhänge eingegangen, wie durch die o. g. Unterkühlungsregelung die Kälteleistung positiv beeinflusst werden kann.

$$Q_0 = \frac{\dot{V}_{geo} * \lambda^* (h1-h4)}{\vartheta}$$

Qo = Kälteleistung Verdichter

$\dot{V}$geo = geometrischer Hubvolumenstrom (Angabe des Verdichterherstellers)

λ = Verdichter-Wirkungsgrad (Angabe des Verdichterherstellers) z.B. Copeland -Scroll = 0,83

h1: Verdichter-Ansaug-Enthalpie

h4 = Verdampfer-Eintritts-Enthalpie

$\vartheta$ = spezifisches Ansaugvolumen - Verdichter

Bei der in der Formel enthaltenen Enthalpiedifferenz wird die durch den Unterkühler 12 erzielte Unterkühlungswärme im Kreislauf genutzt. Auch das spezifische Ansaugvolumen des Verdichters lässt sich auf einen niedrigeren Wert bringen (0 - 2° K), weil eine kleinere Überhitzung am Verdampfer 6 aufgrund der Unterkühlung erreicht werden kann. Hierdurch ist auch der höhere Füllstand an flüssigen Kältemitteln möglich.

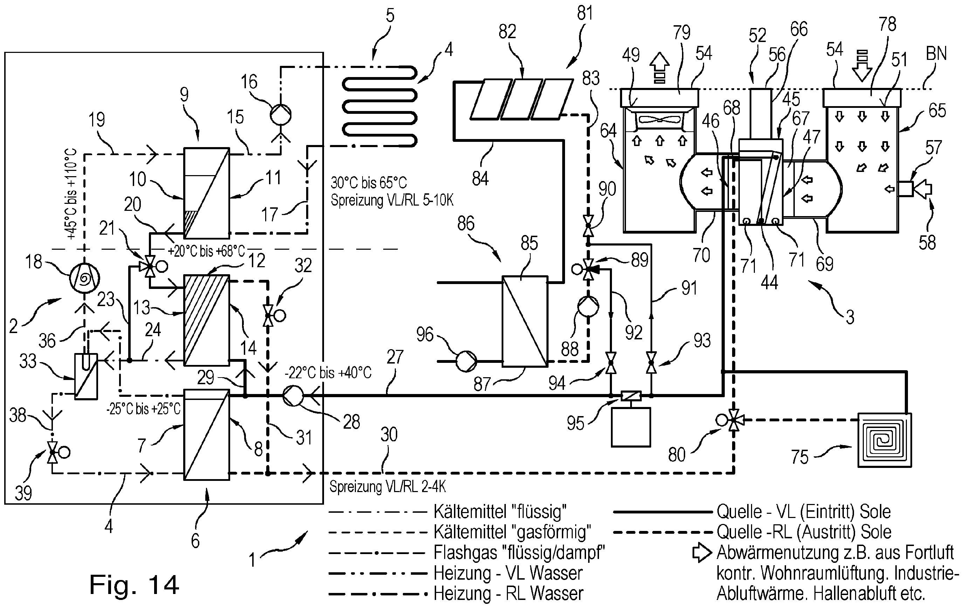

Anhand der Fig. 14 wird nunmehr ein Gesamtschema einer erfindungsgemäßen Wärmepumpenvorrichtung 1 näher erläutert. Sofern auf bau- und wirkungsgleiche Elemente zu den vorangegangenen Ausführungsbeispielen Bezug genommen wird, wird ergänzend auf die obige Beschreibung verwiesen. Insbesondere sind hier die anhand der Fig. 13 beschriebenen Kreisläufe und im Wesentlichen die anhand der Fig. 2 bis 5 beschriebene Ausführungsform zusammengeführt worden. Hinsichtlich der Erdeinbaugruppe 52 werden zusätzlich jeweils am oberen Ende der Erdeinbauschächte 64 und 65 jeweils ein Betonring 78, 79 vorgesehen, der die Distanz der oberen Enden der Erdeinbauschächte 65 und 66 zum Bodenniveau BN ausgleicht. Die Betonringe 78 und 79 dienen dann auch zur jeweiligen Anordnung kreisförmiger Gitterroste 54.

Der Übersichtlichkeit halber ist die Regeleinrichtung für die einzelnen Kreisläufe nicht dargestellt. Aber sämtlicher regelbaren Elemente und Einheiten, wie Ventile 21, 32 sowie 39 sowie der Verdichter 18, die Pumpen 16 und 28, der Sauggas-Überhitzer 33 und auch der Luftkühler 44 mit Ventilatoreinrichtung 55 sind regelbar.

In den Solekreislauf, d.h. in die Rücklaufleitung 27 und die Vorlaufleitung 30, kann in geeigneter Weise Erdwärme eingespeist werden. Dies geschieht über das regelbare Erdwärmeventil 80. Hier lässt sich entsprechend die Vorlauftemperatur in der Vorlaufleitung 30 erhöhen. Als Erdwärmequellen können z.B. Tiefensonden, Flächenkollektoren, Energiekörper oder Energiegräben eingesetzt werden.

Darüber hinaus besteht auch die Möglichkeit, einen Solarkreislauf 81 in die Wärmepumpenvorrichtung 1 zu integrieren. Bei dem Solarkreislauf 81 handelt es sich als Wärmequelle um thermische Sonnenkollektoren 82. Verwendung finden hier insbesondere Vakuum-Heatpipe-Röhren, die z.B. auf dem Dach des Gebäudes installiert sein können. Der Solarkreislauf 81 verwendet das gleiche Übertragungsmedium, hier Sole, wie der Luftkühler/Wärmetransportfluidkreislauf 3. Die thermischen Sonnenkollektoren 82 stehen mittels einer Zulaufleitung 83 und einer Rücklaufleitung 84 mit der Primärseite 85 eines Solarwärmetauschers 86 in Verbindung. Die Sekundärseite 87 des Solarwärmetauschers 86 ist in den Wärmesenkenkreislauf 4 (nicht näher dargestellt) eingebunden. Zu der Sekundärseite 87 des Solarwärmetauschers 86 kann z.B. der Heizungsrücklauf führen und der Heizungsvorlauf abgehen. Eine regelbare Heizungsrücklaufpumpe 96 sorgt für die gewünschte Durchströmung. Der gesamte Solarkreislauf 81 kann unabhängig von dem restlichen Luftkühler/Wärmetransportfluidkreislauf 3 betrieben werden. Das hängt maßgeblich von den Witterungsverhältnissen im Außenbereich ab. Hierzu sind im Solarkreislauf 81 eine Kollektorpumpe 88 und das Dreiwegeventil 89 und das Absperrventil 90 vorgesehen, die eine Entkopplung vom Luftkühler/Wärmetransportfluidkreislauf 3 ermöglichen. Der Solarkreislauf 81 kann auch mit einem Solarpufferspeicher verbunden werden (nicht dargestellt).

Es besteht aber auch die Möglichkeit, den Luftkühler/Wärmetransportfluidkreislauf 3 mit dem Solarkreislauf 81 wärmetechnisch zu koppeln. Hierzu sind die Zulaufverbindungsleitung 91 und Rücklaufverbindungsleitung 92 vorgesehen. Entsprechende Ventile 93 und 94 sorgen für eine Verbindung mit der Rücklaufleitung 27. Zwischen den beiden Ventilen 93 und 94 ist in der Rücklaufleitung 27 eine Rückschlagklappe 95 vorgesehen. Die Rückschlagklappe 95 verhindert einen Kurzschluss zwischen der Zulaufverbindungsleitung 91 und der Rücklaufverbindungsleitung 92 bei geöffneten Ventilen 93 und 94. Im gekoppelten Betrieb wird ein Teil der Sole aus dem Luftkühler/Wärmetransportfluidkreislauf 3 aus der Rücklaufleitung 27 über das Ventil 93, die Zulaufverbindungsleitung 91 und dem Absperrventil 90 dem Solarkreislauf 81 zugeführt und in den thermischen Sonnenkollektoren 82 erwärmt. Anschließend wird die erwärmte Sole über die Rücklaufleitung 84, die Primärseite 85 des Solarwärmetauschers 86, dem Dreiwegeventil 89, der Rücklaufverbindungsleitung 92 und dem Ventil 94 wieder der Rücklaufleitung 27 zugeführt, wodurch die Soletemperatur um einige Grad Celsius erhöht wird. Die Ventile 93 und 94 sorgen für den entsprechenden Volumenstrom, der durch den Solarkreislauf 81 hindurchgeführt wird. Bei dieser Betriebsweise ist üblicherweise die Heizungsrücklaufpumpe 96 ausgeschaltet, so dass die im Solarkreislauf 81 eingebrachte Wärme im Wesentlichen ausschließlich in den Luftkühler/Wärmetransportfluidkreislauf 3 eingebracht wird. Nachdem nur ein Teil der Sole in der Rücklaufleitung 27 abgezapft und wieder rückgeführt wird, kann im vorliegenden Fall von einer "Solareinspritzung" gesprochen werden. Diese Temperaturerhöhung mittels des Solarkreislaufs 81 sorgt entsprechend für positive Effekte für die gesamte Wärmepumpenvorrichtung 1.

Bezugszeichenliste

| | |
|---|---|
| 1 | Wärmepumpenvorrichtung |
| 2 | Kältemittelkreislauf |
| 3 | Luftkühler/Wärmetransportfluidkreislauf |
| 4 | Wärmesenkenkreislauf |
| 5 | Wärmetauscher |
| 6 | Verdampfer |
| 7 | Primärseite |
| 8 | Sekundärseite |
| 9 | Kondensator |
| 10 | Primärseite |
| 11 | Sekundärseite |
| 12 | Unterkühler |
| 13 | Primärseite |
| 14 | Sekundärseite |
| 15 | Vorlaufleitung |
| 16 | Förderpumpe |
| 17 | Rücklaufleitung |
| 18 | Verdichter |
| 19 | Heißgasleitung |
| 20 | Kondensationsleitung |
| 21 | Unterkühler-Kältemittelmischventil |
| 22 | erste Ausgangsleitung |
| 23 | zweite Ausgangsleitung |
| 24 | Ausgangsleitung |
| 25 | Regeleinrichtung |
| 26 | Wärmequelle |
| 27 | Rücklaufleitung |
| 28 | Förderpumpe |
| 29 | Stichleitung |
| 30 | Vorlaufleitung |
| 31 | Zulaufleitung |
| 32 | Regelventil |
| 33 | Sauggas-Überhitzer |
| 34 | Saugleitung |
| 35 | Primärseite |
| 36 | Zuleitung |
| 37 | Sekundärseite |
| 38 | Ausgangsleitung |
| 39 | Expansionsventil |
| 40 | Einspritzleitung |
| 41 | Wärmepumpenvorrichtung |
| 42 | Kellerwand |
| 43 | Erdreich |
| 44 | Luftkühler |
| 45 | Kühlergehäuse |
| 46 | Lufteinlass |
| 47 | Luftauslass |
| 48 | Zuführkanal |
| 49 | Einlassöffnung |
| 50 | Abströmkanal |
| 51 | Auslassöffnung |
| 52 | Erdeinbaugruppe |
| 53 | Bodenplatten |
| 54 | Gitterrost |
| 55 | Ventilatoreinrichtung |
| 56 | Revisionsklappe |
| 57 | Abluftkanal |
| 58 | Wohnraumlüftung |
| 59 | Raumheizung |
| 60 | Wärmespeicher |
| 61 | Warmwasser |
| 62 | Raumkühlung |
| 63 | Kältespeicher |
| 64 | Erdeinbauschacht |
| 65 | Erdeinbauschacht |
| 66 | Revisionsschacht |
| 67 | Aufsteckstutzen |
| 68 | Aufsteckstutzen |
| 69 | Rohr |
| 70 | Rohr |
| 71 | Drainageöffnung |
| 72 | Anbringeinrichtung |
| 73 | Winkelrohr |
| 74 | Winkelrohr |
| 75 | Sole-Erd-Kollektor |
| 76 | Wärmemtransportleitung |
| 77 | Kältetransportleitung |
| 78 | Betonring |
| 79 | Betonring |
| 80 | Erdwärmventil |
| 81 | Solarkreislauf |
| 82 | thermische Sonnenkollektoren |

83 Zulaufleitung
84 Rücklaufleitung
85 Primärseite
86 Solarwärmetauscher
87 Sekundärseite
88 Kollektorpumpe
89 Dreiwegeventil
90 Absperrventil
91 Zulaufverbindungsleitung
92 Rücklaufverbindungsleitung
93 Ventil
94 Ventil
95 Rückschlagklappe
96 Heizungsrücklaufpumpe
BN Bodenniveau
L Luftströmung

**Patentansprüche**

1. Wärmepumpenvorrichtung (1) zur Gebäudebeheizung oder -kühlung oder Warmwasserversorgung mit einem Luftkühler (44), wobei der Luftkühler (44) ein im Außenbereich großteils erdeingebautes Kühlergehäuse (45) mit einem Lufteinlass (46) und/oder einem Luftauslass (47) aufweist, **dadurch gekennzeichnet, dass** der Luftkühler (44) mittels eines Luftkühler/Wärmetransportfluidkreislaufs (3) wärmetechnisch mit einer, zumindest einen Verdichter (18) und/oder einen Verdampfer (6) umfassenden, in einem Innenbereich angeordneten Wärmepumpeneinrichtung (41) gekoppelt ist.

2. Wärmepumpenvorrichtung (1) nach Anspruch 1, **dadurch gekennzeichnet, dass** die im Innenbereich angeordnete Wärmepumpeneinrichtung (41) einen Kondensator (9) und/oder einen Kältemittelkreislauf (2) und/oder ein Expansionsventil (39) umfasst.

3. Wärmepumpenvorrichtung (1) nach Anspruch 1 oder 2, **dadurch gekennzeichnet, dass** ein Zuführkanal (48) zum Lufteinlass (46) und/oder Abströmkanal (50) vom Luftauslass (47) zumindest bereichsweise, bevorzugt mindestens 30 % und weiter bevorzugt mindestens 50 %, erdeingebaut ist bzw. sind.

4. Wärmepumpenvorrichtung (1) nach Anspruch 3, **dadurch gekennzeichnet, dass** der Zuführkanal (48) zum Lufteinlass (46) eine Einlassöffnung (49) aufweist, die im Wesentlichen bündig zum Bodenniveau (BN) angeordnet ist und/oder der Abströmkanal (50) eine Auslassöffnung (51) aufweist, die im Wesentlichen bündig zum Bodenniveau (BN) angeordnet ist.

5. Wärmepumpenvorrichtung (1) nach Anspruch 4, **dadurch gekennzeichnet, dass** die Einlassöffnung (49) des Zuführkanals (48) und/oder die Auslassöffnung (51) des Abströmkanals (50) von einer den jeweiligen Luftstrom sicherstellenden begeh- und/oder befahrbaren Einrichtung, insbesondere einem Gitterrost (54) abgedeckt ist bzw. sind.

6. Wärmepumpenvorrichtung (1) nach einem der vorangegangenen Ansprüche, **dadurch gekennzeichnet, dass** im oder am Abströmkanal (50) eine, eine Zwangsluftströmung bewirkende Ventilatoreinrichtung (55) vorgesehen ist, die bevorzugt zumindest zum Großteil unterhalb des Bodenniveaus (BN) angeordnet ist.

7. Wärmepumpenvorrichtung (1) nach einem der vorangegangenen Ansprüche, **dadurch gekennzeichnet, dass** der Zuführkanal (48), das Kühlergehäuse (45) und der Abströmkanal (50) gemeinsam den Zwangsluftstrom im Wesentlichen V- oder U-förmig umleiten, wobei die Mittelachse des V oder U vertikal ± 45° ausgerichtet ist.

8. Wärmepumpenvorrichtung (1) nach einem der vorangegangenen Ansprüche, **dadurch gekennzeichnet, dass** das Kühlergehäuse (45) eine Drainageeinrichtung zum Ableiten von zumindest Kondenswasser ins Erdreich aufweist.

9. Wärmepumpenvorrichtung (1) nach einem der vorangegangenen Ansprüche, **dadurch gekennzeichnet, dass** der Zuführkanal (48) an eineAblufteinrichtung einer Wohnraumlüftung (58) angeschlossen ist.

10. Wärmepumpenvorrichtung (1) nach einem der vorangegangenen Ansprüche, **dadurch gekennzeichnet, dass** der Luftkühler (44) ein Sole-Luftkühler ist, der mittels Soleleitungen (27,30) mit der, im Innenbereich angeordneten Wärmepumpeneinrichtung (41) verbunden ist.

11. Wärmepumpenvorrichtung (1) nach einem der Ansprüche 3 bis 10, **dadurch gekennzeichnet, dass** eine Erdeinbaugruppe (52) vorgesehen ist, die einen, bevorzugt im Wesentlichen vertikalen, Erdeinbauschacht (64) als Bestandteil des Zuführkanals (48), das Kühlergehäuse (45), einen weiteren, bevorzugt im Wesentlichen vertikalen, Erdeinbauschacht (65) als Bestandteil des Abströmkanals (50) und Luftstrom sicherstellende Verbindungseinrichtungen zwischen dem Lufteinlass (46) des Kühlergehäuses (45) und dem zugehörigen Erdeinbauschacht (64) und dem Luftauslass (47) und dem zugehörigen Erdeinbauschacht (65) umfasst.

12. Wärmepumpenvorrichtung (1) nach Anspruch 11, **dadurch gekennzeichnet, dass** die Erdeinbaugruppe als vormontierte Einbaueinheit für den gemeinsamen Erdeinbau ausgebildet ist.

**13.** Wärmepumpenvorrichtung (1) nach Anspruch 11 oder 12, **dadurch gekennzeichnet, dass** der Erdeinbauschacht (65), der Bestandteil des Abströmkanals (50) ist, eine Anbringeinrichtung (72), insbesondere einen nach innen ragenden Aufsetzflansch, zum Anbringen der Ventilatoreinrichtung (55) von der dem Bodenniveau (BN) zugeordneten Öffnung des Erdeinbauschachts (65) aufweist.

**14.** Wärmepumpenvorrichtung (1) nach einem der Ansprüche 1 bis 13, **dadurch gekennzeichnet, dass** die, im Innenbereich angeordnete Wärmepumpeneinrichtung (41) einen, wärmetechnisch mit dem Luftkühler/Wärmetransportfluidkreislauf (3) gekoppelten Verdampfer (6), einen, wärmetechnisch mit einem Wärmesenkenkreislauf (4) gekoppelten Kältemittelkreislauf (2), und bevorzugt einen Unterkühler (12) aufweist, wobei dann der Unterkühler (12) mit einer Primärseite (13) in den Kältemittelkreislauf (2) und mit einer Sekundärseite (14) in den Luftkühler/Wärmetransportfluidkreislauf (3) als parallel geschaltete Einheit zum Luftkühler (44) und dem Verdampfer (6) eingebunden ist.

**15.** Verwendung einer Erdeinbaugruppe (52) zur Herstellung einer Wärmepumpenvorrichtung (1) nach einem der Ansprüche 1 bis 14, wobei die Erdeinbaugruppe (52) ein Kühlergehäuse (45) mit einem Lufteinlass (46) und einem Luftauslass (47), einen mit dem Lufteinlass (46) verbindbaren oder verbundenen Zuführkanal (48) und einen mit dem Luftauslass (47) verbindbaren oder verbundenen Abströmkanal (50) aufweist.

Fig. 1

Fig. 2

Fig. 5

Fig. 4

Fig. 3

Fig. 6

Fig. 7

54 26 56 BN 54

49 45

50

44

55

48 71 71

52 52

**Fig. 8**

74 73 L

47 26 46

44 56 BN

50 48

55

52 45 71

**Fig. 9**

Fig. 10

EP 4 001 778 A1

Fig. 11

Fig. 12

Fig. 13

Kältemittel "flüssig"
Kältemittel "unterkühlte Flüssigkeit"
Kältemittel "gasförmig"
Flashgas "flüssig/dampf"
Heizung - VL
Heizung - RL
Quelle -VL
Quelle - RL

Fig. 14

30°C bis 65°C
Spreizung VL/RL 5-10K

+45°C bis +110°C

+20°C bis +68°C

-22°C bis +40°C

-25°C bis +25°C

Spreizung VL/RL 2-4K

—  ·  —  ·  —  ·  —  Kältemittel "flüssig"
—  —  —  —  —  —  Kältemittel "gasförmig"
—  —  ·  —  —  ·  —  Flashgas "flüssig/dampf"
—  ·  ·  —  ·  ·  —  Heizung - VL Wasser
—  ·  —  ·  —  ·  —  Heizung - RL Wasser

——————  Quelle - VL (Eintritt) Sole
—  —  —  —  —  Quelle -RL (Austritt) Sole
▷ Abwärmenutzung z.B. aus Fortluft
   kontr. Wohnraumlüftung. Industrie-
   Abluftwärme. Hallenabluft etc.

BN

EP 4 001 778 A1

**EUROPÄISCHER RECHERCHENBERICHT**

Nummer der Anmeldung

EP 21 20 8799

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | FR 2 796 136 A1 (SOLTERM [FR]) 12. Januar 2001 (2001-01-12) | 1,2, 10-15 | INV. F24F1/0003 |
| Y | * Zusammenfassung; Abbildung 4 * ----- | 3-9 | F24F1/60 F24F1/66 |
| X | JP H04 302931 A (MATSUSHITA SEIKO KK) 26. Oktober 1992 (1992-10-26) | 1,10-14 | F24F5/00 |
| Y | * Zusammenfassung; Abbildung 1 * ----- | 3-8 | |
| X | DE 34 02 238 A1 (PHILIPS PATENTVERWALTUNG [DE]) 25. Juli 1985 (1985-07-25) | 1,10-14 | |
| Y | * Zusammenfassung; Abbildung 1 * ----- | 3-7,9 | |

**RECHERCHIERTE SACHGEBIETE (IPC)**

F24F

Der vorliegende Recherchenbericht wurde für alle Patentansprüche erstellt

| Recherchenort | Abschlußdatum der Recherche | Prüfer |
|---|---|---|
| München | 13. April 2022 | Decking, Oliver |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 21 20 8799

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-2022

| Im Recherchenbericht angeführtes Patentdokument | Datum der Veröffentlichung | Mitglied(er) der Patentfamilie | Datum der Veröffentlichung |
|---|---|---|---|
| FR 2796136 A1 | 12-01-2001 | KEINE | |
| JP H04302931 A | 26-10-1992 | KEINE | |
| DE 3402238 A1 | 25-07-1985 | KEINE | |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP H04302931 A
- JP 2005233527 A
- DE 3402238 A1
- DE 19502371 A1
- KR 101223612 B1
- EP 1876402 A2